# EUROPEAN PATENT APPLICATION

(11) **EP 4 455 182 A1**
(43) Date of publication of application: **30.10.2024**
(21) Application number: 23169389.6
(22) Date of filing: 24.04.2023
(51) Int. Cl.: C08G 63/16, C08G 63/183, C08G 63/199, C09D 167/02, C09J 167/02, C07C 29/14

(54) **POLYESTERS AND A PROCESS FOR PREPARING THESE POLYESTERS**

(71) Applicant: Evonik Operations GmbH, 45128 Essen (DE); Technische Universität München, 80290 München (DE)
(72) Inventor: ALTENBUCHNER, Peter, 48165 Münster (DE); BRATIC, Brigita, 80804 München (DE); RIEGER, Berhard, 89275 Elchingen (DE); HEUSER, Thomas, 46284 Dorsten (DE)
(74) Representative: Evonik Patent Association

(57) **Abstract**

The present invention relates to a polymer comprising units derived from a carboxylic acid comprising at least two carboxylic groups or its anhydride and from an alcohol comprising at least two OH-groups, wherein the alcohol comprising at least two OH-groups is a bi-cyclo-aliphatic diol of formula (IX) 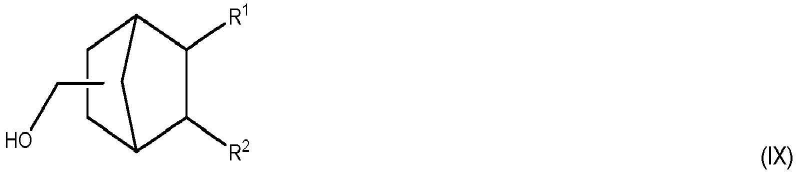 with R¹ = ethyl, -CHz-CHz-CHzOH, or -CH(-CH₃)-CH₂OH, and R² = H or -CHzOH, with the proviso that R² is not H when R¹ = ethyl,
to a process for preparing a polymer by reacting at least one carboxylic acid comprising at least two carboxylic groups or its anhydride or ester and at least one alcohol comprising at least two OH-groups, wherein the alcohol comprising at least two OH-groups used is a bi-cyclo-aliphatic diol of formula (IX), and to the use of a polymer according to the invention or obtained by a process according to the invention as or for the production of lacquers, coatings or adhesives, preferably tube or can coatings, metal decorating enamels, heat sealing lacquers, hot laminating adhesives, or primers.

## Description

The present invention relates to a polymer comprising units derived from a carboxylic acid comprising at least two carboxylic groups or its anhydride and from an alcohol comprising at least two OH-groups, wherein the alcohol comprising at least two OH-groups is a bi-cyclo-aliphatic diol of formula (IX) 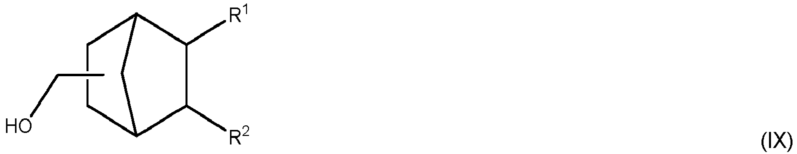
with R¹ = ethyl, -CH₂-CH₂-CH₂OH, or -CH(-CH₃)-CH₂OH, and R² = H or -CH₂OH, with the proviso that R² is not H when R¹ = ethyl,
to a process for preparing a polymer by reacting at least one carboxylic acid comprising at least two carboxylic groups or its anhydride or ester and at least one alcohol comprising at least two OH-groups, wherein the alcohol comprising at least two OH-groups used is a bi-cyclo-aliphatic diol of formula (IX), and to the use of a polymer according to the invention or obtained by a process according to the invention as or for the production of lacquers, coatings or adhesives, preferably tube or can coatings, metal decorating enamels, heat sealing lacquers, hot laminating adhesives, or primers.

### STATE OF THE ART

Mijolovic et al. describe in WO 2011/023540 A2 (US 2012/0157548 A1), the formation of a mixture of compounds of formula (I) 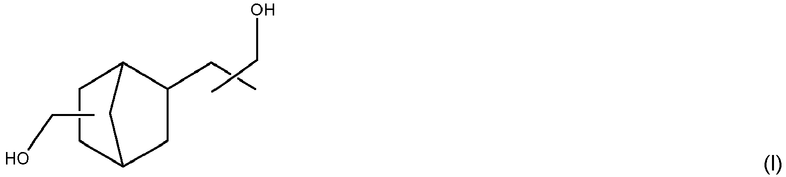 starting from the (E)-/(Z)-isomers of formula (II)

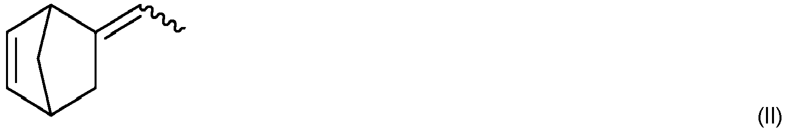

The synthesis includes a two-step process, in which the compound of formula (II) is transformed via rhodium catalyzed hydroformylation under harsh reaction conditions (T = 140 °C and CO/H₂ = 2 to 60 MPa, 1/1) into the corresponding aldehydes of formula (III)

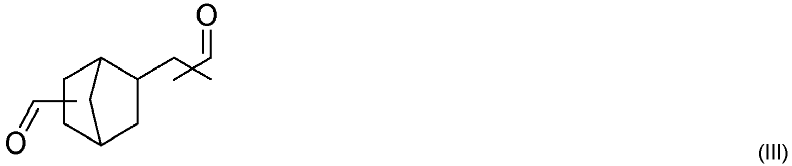

The regio-isomer mixture of aldehydes is separated by distillation and subsequent reduction with RANEY^{®}-Ni at a reaction temperature of 170 °C and Hz pressure of 28 MPa results in a mixture of bicyclic diol compounds of formula (I). It is also mentioned that 5-vinyl-2-norbonene (VNB), formula (VI), might be used as starting material.

Polyesters or polymers based on dicidol (tricyclodecanedimethanol), formula (IV) 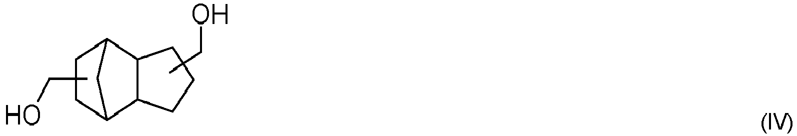 as monomer are long known in the art (ACS Sustainable Chem. Eng. 2020, 8, 15199-15208 and J Polym Res (2016) 23: 42, DOI 10.1007/s10965-016-0933-5; EP 0934988 A2, EP 1398337 A2, and EP 2853551 A1). Such polyesters can for example be used as or for the production of tube or can coatings, metal decorating enamels, heat sealing lacquers, hot laminating adhesives, or primers.

The problem to be solved by the present invention, was to provide alternative polyesters useful for preparing or as lacquers, coatings or adhesives, preferably tube, coil, or can coatings, metal decorating enamels, heat sealing lacquers, hot laminating adhesives, or primers.

### DISCLOSURE OF THE INVENTION

Surprisingly it has been found that, this problem is solved by the polymers according to the invention as claimed in the claims.

The present invention therefore relates to a polymer comprising units derived from a carboxylic acid comprising at least two carboxylic groups or its anhydride and from an alcohol comprising at least two OH-groups, wherein the alcohol comprising at least two OH-groups is a bi-cyclo-aliphatic diol of formula (IX) 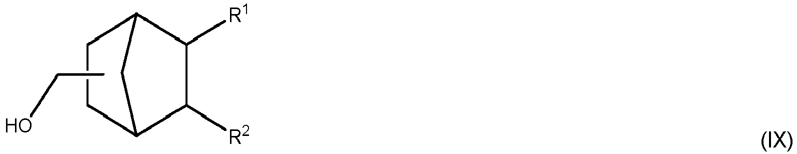 with R¹ = ethyl, -CH₂-CH₂-CH₂OH, or -CH(-CH₃)-CH₂OH, and R² = H or -CH₂OH, with the proviso that R² is not H when R¹ = ethyl.

The present invention further relates to a process for preparing a polymer by reacting at least one carboxylic acid comprising at least two carboxylic groups or its anhydride or ester and at least one alcohol comprising at least two OH-groups, wherein the alcohol comprising at least two OH-groups used is a bi-cyclo-aliphatic diol of formula (IX).

The present invention further provides (a method to use) the use of the polymers according to the invention or obtained by a process according to the invention as or for the production of tube, coil, or can coatings, metal decorating enamels, heat sealing lacquers, hot laminating adhesives, or primers.

The polymers according to the invention can show a large variety of glass transition temperatures that are similar to those of polyesters based on dicidol as monomer without the need to use dicidol. The polymers according to the invention have the advantage that a larger pool of industrial feedstock can be used for producing polymers useful for preparing or as tube, coil, or can coatings, metal decorating enamels, heat sealing lacquers, hot laminating adhesives, or primers.

The polymers according to the invention or its starting materials the diols can be obtained using less harsh conditions in the production process than the conditions described in the prior art.

The polymers, processes, and uses according to the invention are described by way of example hereinafter, without any intention that the invention be restricted to these illustrative embodiments. If ranges, general formulae or classes of compounds are specified below, these are intended to encompass not only the corresponding ranges or groups of compounds which are explicitly mentioned but also all subranges and subgroups of compounds which can be obtained by leaving out individual values (ranges) or compounds. Where documents are cited in the context of the present description, their content shall fully form part of the disclosure content of the present invention, particularly in respect of the matters referred to. Percentages specified hereinbelow are by weight unless otherwise stated. Where average values are reported hereinafter, these are the numerical average, unless stated otherwise. Where properties of a material are referred to hereinafter, for example viscosities or the like, these are the properties of the material at 25°C, unless stated otherwise. Where chemical (empirical) formulae are used in the present invention, the specified indices may be not only absolute numbers but also average values.

The present invention relates to a polymer comprising units derived from a carboxylic acid comprising at least two carboxylic groups or its anhydride and units derived from an alcohol comprising at least two OH-groups, wherein the alcohol comprising at least two OH-groups is a bicyclo-aliphatic diol of formula (IX) 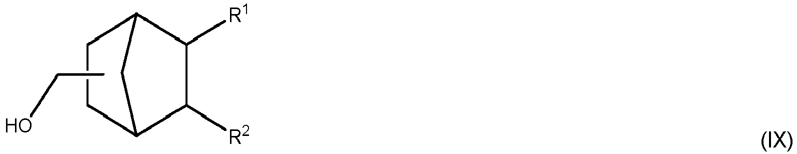 with R¹ = ethyl, -CH₂-CH₂-CH₂OH, or -CH(-CH₃)-CH₂OH, and R² = H or -CH₂OH, with the proviso that R² is not H when R¹ = ethyl. Preferably the alcohol comprising at least two OH-groups is a bicyclo-aliphatic diol of formula (I).

Preferably at least 50 mol-% of the units in the polymer, more preferably of from 60 to 100 mol-% of the units in the polymer, and most preferably of from 70 to 95 mol-% of the units in the polymer derived from an alcohol comprising at least two OH-groups are based on a bi-cyclo-aliphatic diol of formula (IX).
The bi-cyclo-aliphatic diol is preferably 2-(5-hydroxymethylbicyclo[2.2.1]hept-2-yl)propan-1-ol (formula (IXa)), 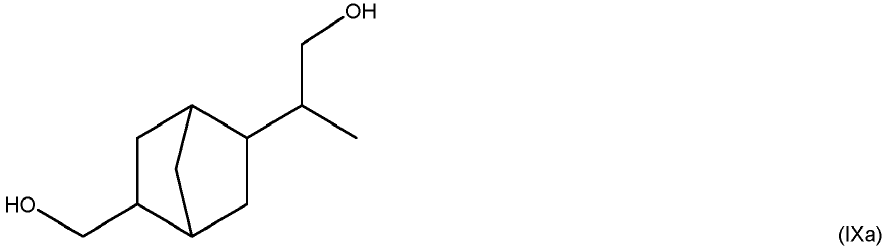
2-(6-hydroxymethylbicyclo[2.2.1]hept-2-yl)propan-1-ol (formula (IXb)), 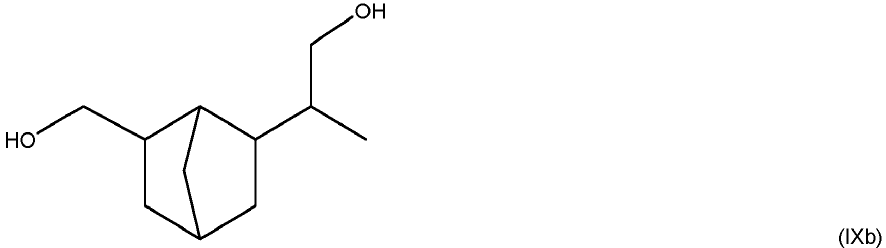
3-(5-hydroxymethylbicyclo[2.2.1]hept-2-yl)propan-1-ol (formula (IXc)), 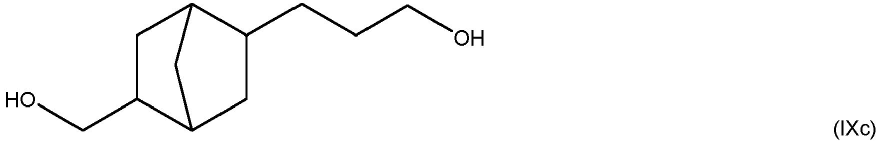
3-(6-hydroxymethylbicyclo[2.2.1]hept-2-yl)propan-1-ol (formula (IXd)), 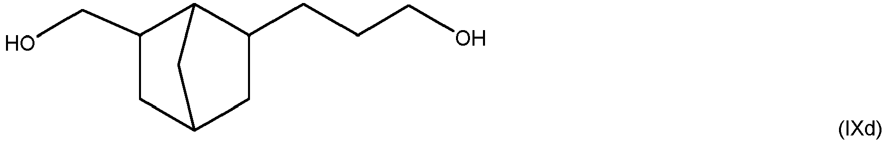
(3-ethylbicyclo[2.2.1]heptane-2,5-diyl)dimethanol (formula (lXe)) 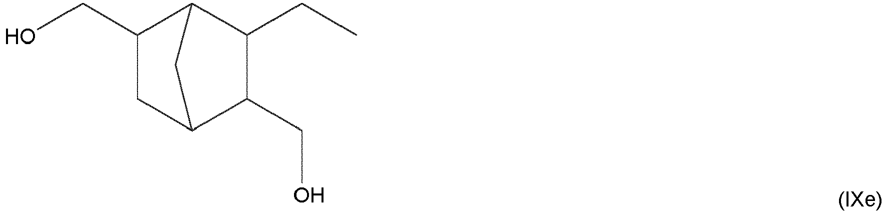
(3-ethylbicyclo[2.2.1]heptane-2,6-diyl)dimethanol (formula (!Xf)) 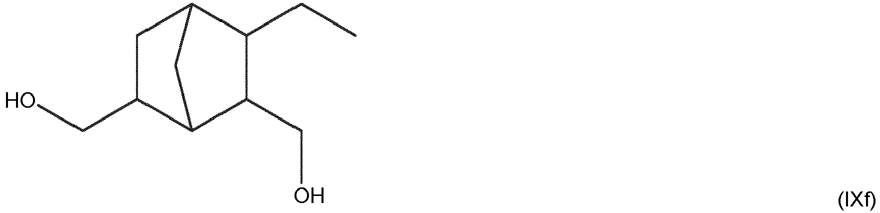
or a mixture of two or more of these compounds, more preferably the bi-cyclo-aliphatic diol is a mixture of 2-(5-hydroxymethylbicyclo[2.2.1]hept-2-yl)propan-1-ol, 2-(6-hydroxymethylbicyclo[2.2.1]hept-2-yl)propan-1-ol, 3-(5-hydroxymethylbicyclo[2.2.1]hept-2-yl)-propan-1-ol, 3-(6-hydroxymethylbicyclo[2.2.1]hept-2-yl)propan-1-ol, (3-ethylbicyclo[2.2.1]heptane-2,5-diyl)dimethanol, or (3-ethylbicyclo[2.2.1]heptane-2,6-diyl)dimethanol. The bi-cyclo-aliphatic diols or mixtures thereof can be obtained as described in WO 2011/023540 A2.

Most preferably the units derived from an alcohol comprising at least two OH-groups are derived from a mixture comprising 2-(5-hydroxymethylbicyclo[2.2.1]hept-2-yl)propan-1-ol, 2-(6-hydroxymethylbicyclo[2.2.1]hept-2-yl)propan-1-ol, 3-(5-hydroxymethylbicyclo[2.2.1]hept-2-yl)-propan-1-ol, 3-(6-hydroxymethylbicyclo[2.2.1]hept-2-yl)propan-1-ol, (3-ethylbicyclo[2.2.1]heptane-2,5-diyl)dimethanol, and (3-ethylbicyclo[2.2.1]heptane-2,6-diyl)dimethanol.

The units derived from a carboxylic acid comprising at least two carboxylic groups are preferably derived from phthalic acid, isophthalic acid, terephthalic acid, 1,2-cyclohexan dicarboxylic acid, 1,3-cyclohexan dicarboxylic acid, 1,4-cyclohexan dicarboxylic acid, maleic acid, malonic acid, 1,2,4-benzenetricarboxylic acid, glutaric acid, adipic acid, 2,2,4-trimethyl-adipic acid, azelaic acid, succinic acid, undecanedioic acid, octadecanedioic acid, dimer fatty acids, itaconic acid, fumaric acid, naphthalene-2,6-dicarboxylic acid, or sebacic acid or an anhydride or ester thereof, more preferably from phthalic acid, isophthalic acid, terephthalic acid, 1,2-cyclohexan dicarboxylic acid, 1,3-cyclohexan dicarboxylic acid, 1,4-cyclohexan dicarboxylic acid, maleic acid, malonic acid, succinic acid, glutaric acid, adipic acid, or sebacic acid, and most preferably from terephthalic acid.

The polymer according to the invention preferably comprises at least 50 mol-%, more preferably of from 60 to 100 mol-%, and most preferably of from 70 to 95 mol-% of units in the polymer derived from carboxylic acids comprising at least two carboxylic groups that are based on phthalic acid, isophthalic acid, terephthalic acid, 1,2-cyclohexan dicarboxylic acid, 1,3-cyclohexan dicarboxylic acid, 1,4-cyclohexan dicarboxylic acid, maleic acid, malonic acid, succinic acid, glutaric acid, adipic acid, or sebacic acid, or a mixture thereof, most preferably based on terephthalic acid.

The polymer according to the invention can preferably consist only of units derived from a carboxylic acid comprising at least two carboxylic groups or its anhydride and units derived from a bi-cyclo-aliphatic diol.

However, the polymer according to the invention can also comprise units that are based on one or more hydroxy groups comprising organic acids, preferably hydroxy stearic acid or glycolic acid, as monomers. Preferably the polymer according to the invention comprises up to 50 mol-%, more preferably of from 0 to 40 mol-%, and most preferably of from 10 to 30 mol-% of units that are based on one or more hydroxy groups comprising organic acids, preferably hydroxy stearic acid or glycolic acid as monomer.

The units that are based on one or more hydroxy groups comprising organic acids might be distributed in the polymer randomly or as one or more oligomeric blocks.

The composition of the polymer can be determined by hydrolysis of the polymer and following GC-analytic.

It might be advantageous if the polymer according to the invention further comprises units that are based on dihydroxy- or polyhydroxy-compounds, different from bi-cyclo-aliphatic diols, preferably ethylene glycol, propylene glycol, butylene glycol, 1,5-pentanediol, 1,6-hexanediol, 1,9-nonanediol, diethylene-glycol, polyethylene-glycol, polytetrahydrofuran, neopentylglycol, 2-butyl-2-ethyl-1,3-propandiole, hydroxypivalylhydroxypivalat, 1,2-propanediol, 2-ethylhexane1,3-diol, trimethylhexanediol, 2,2,4 trimethyl-1,3-pentanediol, 1,4-cyclohexanedimethanol, glycerol, pentaerythritol, trimethylolpropane, di(trimethylolpropane), dimethylolpropionic acid, trimethylolpropane monoallyl ether, dicidol (tricyclodecanedimethanol), or 2,2,4,4-tetramethylcyclobutane-1,3-diol, or mixtures thereof, as monomer, more preferably on ethylene glycol or propylene glycol as monomer.

More preferably the polymer according to the invention comprises units that are based on one or more hydroxy groups comprising organic acids, preferably hydroxy stearic acid or glycolic acid, as monomers and units that are based on dihydroxy-compounds, different from bi-cyclo-aliphatic diols, preferably on ethylene glycol or propylene glycol as monomer.

The polymer according to the invention preferably has a number averaged molecular weight Mn, determined by the method given in the example section below, of from 8 to 25 kg/mol.

The polymer according to the invention preferably has a weight averaged molecular weight Mw, determined by the method given in the example section below, of from 10 to 75 kg/mol.

The polymer according to the invention preferably has a glass transition temperature Tg, determined by the method given in the example section below, of from 40 to 110 °C.

The polymer according to the invention preferably has a decomposition temperature determined by the method given in the example section below above 350 °C, preferably above 375 °C and below 400 °C, and most preferably above 377 °C and below 390 °C.

More preferably the polymer according to the invention has a number averaged molecular weight Mn of from 8 to 25 kg/mol, a weight averaged molecular weight Mw of from 10 to 75 kg/mol, a decomposition temperature above 377 °C and below 390 °C, and a glass transition temperature Tg of from 40 to 110 °C, each parameter determined by the methods given in the example section below.

The polymer according to the invention might be prepared by any known method of polymerization/(trans-)esterification of carbon acids comprising at least two carboxylic groups or its anhydrides or esters, with compounds comprising at least two hydroxy groups. Preferably the polymer according to the invention is prepared by the process according to the invention as described below.

In the process according to the invention for preparing a polymer by reacting at least one carboxylic acid comprising at least two carboxylic groups or its anhydride or ester and at least one alcohol comprising at least two OH-groups, the alcohol comprising at least two OH-groups used is a bi-cyclo-aliphatic diol of formula (I). With the process according to the invention preferably a polymer according to the invention is prepared.

As bicyclo-aliphatic diol preferably 2-(5-hydroxymethylbicyclo[2.2.1]hept-2-yl)propan-1-ol (Formula (IXa)), 2-(6-hydroxymethylbicyclo[2.2.1]hept-2-yl)propan-1-ol (Formula (IXb)), 3-(5-hydroxymethylbicyclo[2.2.1]hept-2-yl)-propan-1-ol (Formula (IXc)), 3-(6-hydroxymethylbicyclo[2.2.1]hept-2-yl)propan-1-ol (Formula (IXd)), (3-ethylbicyclo[2.2.1]heptane-2,5-diyl)dimethanol (Formula (IXe)), or (3-ethylbicyclo[2.2.1]heptane-2,6-diyl)dimethanol (Formula (!Xf)), or a mixture of two or more of these compounds, more preferably a mixture comprising 2-(5-hydroxymethylbicyclo[2.2.1]hept-2-yl)propan-1-ol, 2-(6-hydroxymethylbicyclo[2.2.1]hept-2-yl)propan-1-ol, 3-(5-hydroxymethylbicyclo[2.2.1]hept-2-yl)-propan-1-ol, 3-(6-hydroxymethylbicyclo[2.2.1]hept-2-yl)propan-1-ol, (3-ethylbicyclo[2.2.1]heptane-2,5-diyl)dimethanol, and (3-ethylbicyclo[2.2.1]heptane-2,6-diyl)dimethanol is used.

Preferably phthalic acid, isophthalic acid, terephthalic acid, 1,2-cyclohexan dicarboxylic acid, 1,3-cyclohexan dicarboxylic acid, 1,4-cyclohexan dicarboxylic acid, maleic acid, malonic acid, 1,2,4-benzenetricarboxylic acid, glutaric acid, adipic acid, 2,2,4-trimethyl-adipic acid, azelaic acid, undecanedioic acid, octadecanedioic acid, dimer fatty acids, itaconic acid, fumaric acid, naphthalene-2,6-dicarboxylic acid, or sebacic acid or an anhydride or ester thereof, more preferably phthalic acid, isophthalic acid, terephthalic acid, 1,2-cyclohexan dicarboxylic acid, 1,3-cyclohexan dicarboxylic acid, 1,4-cyclohexan dicarboxylic acid, maleic acid, malonic acid, succinic acid, glutaric acid, adipic acid, or sebacic acid, or its anhydride or ester, and most preferably dimethyl terephthalate, is used as carboxylic acid comprising at least two carboxylic groups or its anhydride or ester.

It might be advantageous to start the reaction using a molar ratio of carboxylic acid comprising at least two carboxylic groups or its anhydride or ester to bi-cyclo-aliphatic diol of from 1 : 1 to 1 : 4, preferably of from 1 : 1.5 to 1 to 2.5, and most preferably 1 : 2.

As additional monomers the hydroxy groups comprising organic acids and the dihydroxy- or polyhydroxy-compounds, different from bi-cyclo-aliphatic diols, mentioned above can be used in the process according to the invention.

The process for preparing the polymer is preferably performed at a temperature of above 100 °C, preferably of from 120 °C to 250 °C while removing water (esterification reaction) and/or alcohol (trans-esterification reaction) from the reaction mixture. Depending on the composition of the polymer to be prepared further monomers as mentioned above might be added to the reaction mixture. Preferably the reaction is performed until no further water or alcohol is formed. The reaction is preferably performed in a time of from 1 to 36 hours, preferably 6 to 30 hours.

It might be advantageous to add a catalyst to the reaction mixture. Preferably a catalyst comprising Ti is added to the reaction mixture, most preferably Ti(O*n*Bu)₄. Is added to the reaction mixture as catalyst. The amount of catalyst added is preferably 0.01 to 10 mol-%, more preferably 0.5 to 5 mol-% and most preferably 1 mol-% based on the amount of carboxylic acid used in the reaction mixture.

The process according to the invention for preparing a polymer can be conducted in the presence or absence of oxygen. Preferably the process is started in normal atmosphere and at the end the process is conducted under reduced pressure.

It may be advantageous if a majority of the amount of water or alcohol released is initially distilled off at standard pressure. In the further course, the remaining water or alcohol of reaction are preferably eliminated by distillation, using reduced pressure, through an enlargement in the surface area, or by the passing of an inert gas stream through the reaction mixture. A preferred inert gas is nitrogen.

It may be advantageous to add further additives and processing auxiliaries, such as antioxidants or color stabilizers, to the reaction (esterification) mixture.

In the process according to the invention preferably 2-(5-hydroxymethylbicyclo[2.2.1]hept-2-yl)propan-1-ol (Formula la), 2-(6-hydroxymethylbicyclo[2.2.1]hept-2-yl)propan-1-ol (Formula lb), 3-(5-hydroxymethylbicyclo[2.2.1]hept-2-yl)-propan-1-ol (Formula Ic), or3-(6-hydroxymethylbicyclo[2.2.1]hept-2-yl)propan-1-ol (Formula Id), (3-ethylbicyclo[2.2.1]heptane-2,5-diyl)dimethanol (Formula (IXe)), or (3-ethylbicyclo[2.2.1]heptane-2,6-diyl)dimethanol (Formula (lXf)) or a mixture of two or more of these compounds is used, obtained by a method comprising a step of hydroformylation and a step of reduction, using a compound according to formula (V) 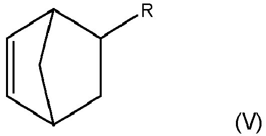 with R = vinyl, ethylidene, or acetyl, more preferably with R = vinyl or ethylidene, and most preferably with R = ethylidene , as starting material, whereby the hydroformylation step and the reduction step might be performed in one step. The hydroformylation step can be performed in the presence of any suitable catalyst, e.g. cobalt (carbonyl) catalyst or rhodium catalyst or the like. The hydroformylation step preferably being performed in the presence of a catalyst comprising Rhodium and a phosphor comprising ligand. Preferably the catalyst is obtained from bis(1,5-cyclooctadiene)rhodium(I) tetrafluoroborate salt ([Rh(COD)₂]BF₄) and triethylphosphane (TEP) or tris(2,4-di-tert-butylphenyl)-phosphite the latter being commercially available under the tradename Alkanox^{®} 240 phosphite from Addivant Corporation. Further possible ligands are for example OXOPHOS^{®}, especially OXOPHOS^{®} 17, available form Evonik Operations GmbH, or (*S*ₐₓ*S*,*S*)-bobphos, available for example from Smolecule LLC.

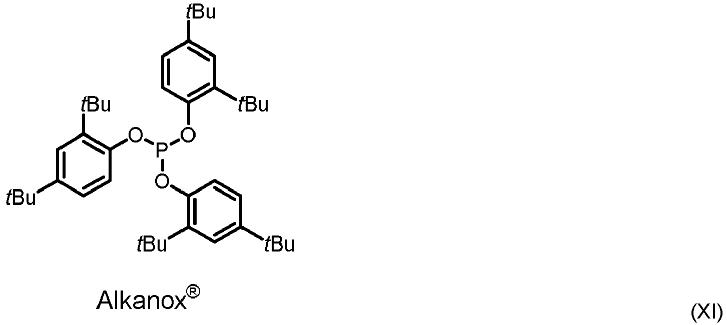

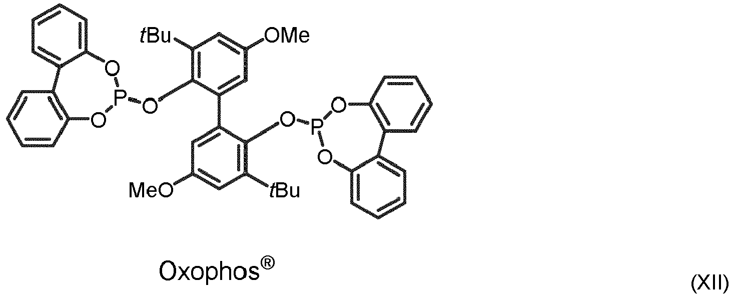

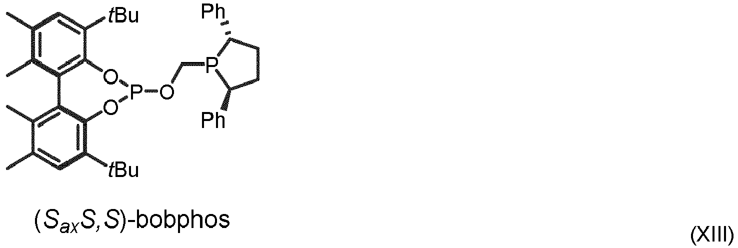

The hydroformylation step is preferably performed at a temperature of from 50 to 200 °C, preferably 60 to 125 °C and at a syngas (molar ratio CO/H₂ preferably from 2/1 to 1/1) pressure of from 2 to 12 MPa, preferably 4 to 7 MPa and most preferably 4.5 to 5.5 MPa.

When using an ALKANOX^{®} based catalyst the hydroformylation step is preferably performed at a temperature of from 75 to 125 °C and at a syngas (molar ratio CO/H₂ preferably 1/1) pressure of 4 to 7 MPa, more preferably 4.5 to 5.5 MPa.

When using an OXOPHOS^{®} based catalyst the hydroformylation step is preferably performed at a temperature of from 120 to 160 °C and at a syngas (molar ratio CO/H₂ preferably from 3/2) pressure of from 8 to 12 MPa, preferably 10 MPa.

When using a (*S*ₐₓ*S*,*S*)-bobphos based catalyst the hydroformylation step is preferably performed at a temperature of from 50 to 70 °C and at a syngas (molar ratio CO/H₂ preferably 1/1) pressure of from 2 to 10 MPa, preferably 4 to 7 MPa and most preferably 4.5 to 5.5 MPa.

As intermediate products the following dialdehydes isomers of formula (Xa), (Xb), and (Xc) can be obtained after the hydroformylation step(s):

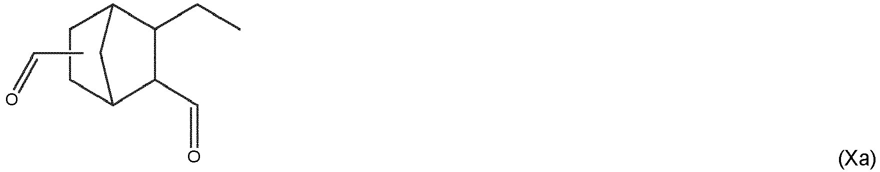

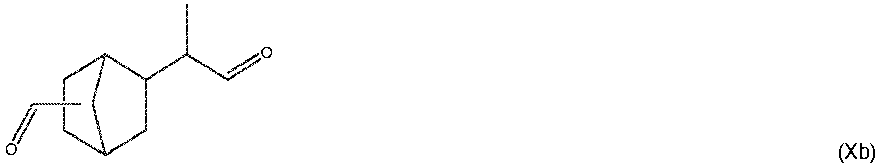

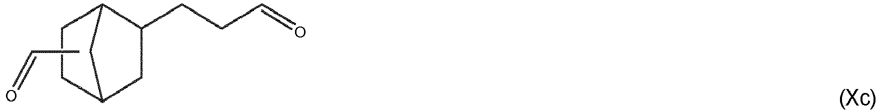

The reduction step is preferably performed in the presence of NaBH₄ or using H₂ and RANEY^{®}-Ni in toluene/HzO.

However, if starting from a compound of formula (V) where R = vinyl (formula (VI)) 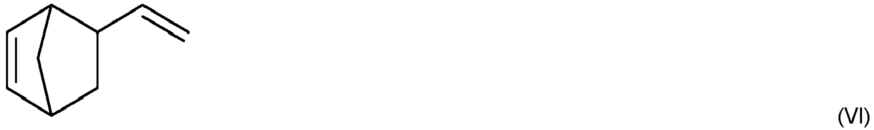 the reaction can be performed as reductive hydroformylation without the need of an extra reduction step. Reaction temperature as well as syngas pressure are preferably in the same preferred ranges as given for the hydroformylation step above.

If starting from a compound of formula (II) the intermediate of formula (VII) 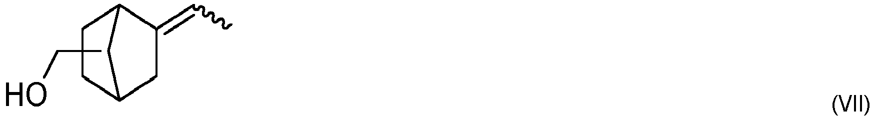 is obtained after the first reductive hydroformylation step.

The polymers of the present invention or the polymers obtained by a process according to the invention can for example be used as, or for the production of lacquers, coatings or adhesives, preferably tube, coil, or can coatings, metal decorating enamels, heat sealing lacquers, hot laminating adhesives, or primers.

The present invention will be further illustrated by the following nonlimiting examples which indicate further features, embodiments, aspects, and advantages of the present invention.

### Examples:

### 1. Test methods:

### a) Nuclear Magnetic Resonance Spectroscopy (NMR spectroscopy)

The ¹H and ¹³C nuclear magnetic resonance spectra were measured on Bruker AV400 at ambient temperature (298 K). Chemical shifts are given in parts per million (ppm) and were referenced using the residual proton signal of chloroform-d₃ [δ (¹H) = 7.26 ppm, (¹³C) = 77.2 ppm]. All coupling constants (J) are reported in Hertz (Hz). As abbreviation for the signal multiplicity the following abbreviations are used: s - singlet, d - duplet, dd - duplet of duplets, q - quartet, t = triplet, sept - septet, m - multiplet.

### b) Gas Chromatography-Mass Spectrometry (GC-MS)

Gas chromatography mass spectrometry analytical measurements were performed with PhMe, THF, DCM, and EtOAc solutions on an Agilent GC 7890B using a HP-5MS UI column (0.25 mm, 0.25 µm) and a single quadrupole mass detector MS 5977A. All samples were in concentration of 0.5 mg/mL. The practical temperature range is 45 °C to 325 °C.

### c) Gel permeation Chromatography (GPC)

Average molar mass (Mw and Mn) and polydispersity (Mw/Mn) of polymers were determined using gel-permeation chromatography. All samples were in a concentration range of from 2 mg/mL to 4 mg/mL. Relative measurements in chloroform as eluent and poly(styrene) as standard were performed on a PL-GPC 50 Plus from Polymer Laboratories using PLgel 5 µm MIXED-C (2 × 7.5 × 300 mm).

### d) Thermogravimetric Analysis (TGA)

Forthermogravimetric analysis a TGA Q5000 from TA Instruments was used. The samples of 1 mg to 2 mg were heated with a heating rate of 10 K/min under argon. Analysis of the mass loss in dependency of the time was performed using TA universal software. The onset-point describes the initial temperature of the decomposition of the material.

### e) Differential Scanning Calorimetry (DSC)

For differential scanning calorimetry a DSC Q2000 from TA Instruments was used. The samples of 5 mg to 10 mg were filled into an aluminum pan (Tzero) and are heated from -100 to 200 °C at a rate of 10 K/min. The reported values were determined with a TA Universal Analysis from the third heating cycle. Decomposition temperature and glass transition temperature were determined using this method.

### 2. Raw Materials used

All hydroformylation reactions were performed in a 100 mL steel autoclave equipped with glass inlay, magnetic stirring and oil bath heating under exclusion of water and oxygen and an atmosphere of a mixture of carbon monoxide 4.7 (≥ 99.999 %, Westfalen AG) and hydrogen 5.0 (≥ 99.999 %, Westfalen AG). Unless otherwise stated, all other experiments were carried out under an atmosphere of argon 4.6 (≥ 99.999 %, Westfalen AG) using standard Schlenk techniques. The glass ware used was heat dried under fine vacuum prior to use. The up-scaling hydroformylation and hydrogenation reactions were performed in a 2 L floor stand reactor of series 4530 from Parr Instrument Company equipped with a 4848 Reactor Controller and a non-stirred 2 L pressure vessel of series 4600 from Parr Instrument Company. Toluene, Dichloromethane (DCM) and THF respectively were dried over a solvent purification system (SPS) MB SPS 800 from MBraun and stored over 4 Å molecular sieves in 500 mL Schlenk flasks whereas the toluene was stored over 4 Å molecular sieves in a 500 mL Schott Duran bottle in the glovebox. EtOH was deoxygenated by flowing argon through the solvent and stored under 3 Å molecular sieves in a 500 mL Schlenk flask. ENB and VNB were stored under 4 Å molecular sieves in a 500 mL vessel

Schlenk flask. All commercially available chemicals were purchased from abcr GmbH, Acros Organics, Tokyo Chemical Industry Co., Ltd. (5-Acetyl-2-norbornene), and Sigma Aldrich Chemie GmbH (ENB and VNB) respectively and used without further purification.

### Example 1: Preparation of a mixture of diols of formula (V) starting from ENB formula (II)

### Example 1a: Preparation of dialdehydes according to scheme 1a as 1^{st} step

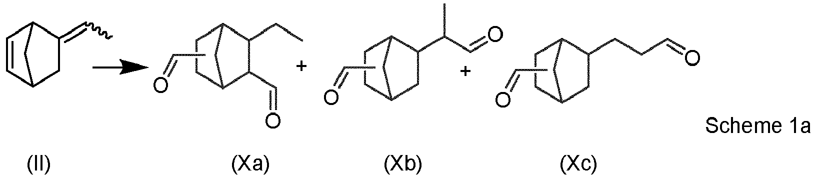

10.14 mg (24.96 µmol, 0.10 mol%) of [Rh(COD)₂]BF₄ and 50.06 mg (77.37 µmol, 0.31 mol%) of Alkanox^{®} (XI) were dissolved in 25 mL toluene (1.00 M) in a snap-cap vial in an autoclave. To the solution 3.00 g (24.96 mmol, 1.00 eq.) of (II) were added. The autoclave was pressurized with 5 MPa of syngas (CO/H₂ = 1:1) and the reaction mixture was stirred for 4 h at a reaction temperature of 100 °C. The resulted pale yellow solution was cooled down to room temperature and was either used directly for hydrogenation or the solvent was removed by condensation whereas the product was purified by distillation (b.p.: 65-76 °C, reduced pressure: 5 to 6 Pa) to yield 3.42 g (18.47 mmol, 76%) of (X) as a mixture of (Xa) to (Xc) as a colorless liquid.

**¹H NMR (500 MHz, CDCl₃, 298 K):** *δ* (ppm) = 9.78-9.74 (m, 0.24 H, C*H*O), 9.67-9.53 (m, 1.76 H, C*H*O), 2.67-2.49 (m, 1.00 H), 2.49-2.38 (m, 1.00 H), 2.38-1.15 (m, 11 H), 1.14-0.99 (m, 3 H), 0.98-0.88 (m, 0.40 H), 0.88-0.63 (m, 0.4 H).

In view of the big overlap of the aliphatic proton signals in the ¹H-NMR spectrum, only the resonances of the signals of the aldehyde protons can be assigned.

**¹³C NMR (400 MHz, CDCl₃**, **298 K):** *δ* (ppm) = 204.93 (*C*HO), 204.87 (*C*HO), 204.72 (*C*HO), 204.69 (*C*HO), 204.56 (*C*HO), 204.54 (*C*HO), 204.46 (*C*HO), 203.73 (*C*HO), 203.21 (*C*HO), 203.11 (*C*HO), 203.04 (*C*HO), 202.99 (*C*HO), 202.92 (*C*HO), 202.90 (*C*HO), 202.87 (*C*HO), 202.64 (*C*HO), 202.59 (*C*HO), 202.57 (*C*HO), 202.48 (*C*HO), 202.46 (*C*HO), 202.25 (*C*HO), 202.19 (*C*HO), 201.97 (*C*HO), 201.78 (*C*HO), 61.42 (*C*H), 61.09 (*C*H), 55.18 (*C*H), 55.13 (*C*H), 55.09 (*C*H), 54.82 (*C*H), 54.75 (*C*H), 53.93 (*C*H), 53.90 (*C*H), 53.80 (*C*H), 53.70 (*C*H), 51.60 (*C*H), 51.32 (*C*H), 51.15 (*C*H), 49.87 (*C*H), 49.74 (*C*H), 48.92 (*C*H), 48.87 (*C*H), 48.11 (*C*H), 47.76 (*C*H), 47.75 (*C*H), 47.66 (*C*H), 43.13 (*C*H₂), 43.10 (*C*H), 43.08 (*C*H₂), 43.04 (*C*H), 42.90 (*C*H), 42.84 (*C*H), 42.62 (*C*H), 42.50 (*C*H), 42.36 (*C*H₂), 41.93 (*C*H), 41.82 (*C*H), 41.67 (*C*H), 41.61 (*C*H), 41.53 (*C*H), 41.22 (*C*H), 41.07 (*C*H), 40.79 (*C*H), 40.77 (*C*H), 40.50 (*C*H), 40.39 (*C*H), 40.21 (*C*H), 39.79 (*C*H), 39.63 (*C*H), 39.53 (*C*H), 39.49 (*C*H), 39.47 (*C*H), 39.28 (*C*H), 39.11 (*C*H), 38.74 (*C*H), 38.65 (*C*H), 38.59 (*C*H), 38.56 (*C*H), 38.48 (*C*H), 38.41 (*C*H), 38.24 (*C*H), 38.22 (*C*H), 38.19 (*C*H), 38.01 (*C*H), 37.79 (*C*H₂), 37.70 (*C*H₂), 37.60 (*C*H₂), 37.54 (*C*H₂), 37.49 (*C*H₂), 37.48 (*C*H₂), 36.95 (*C*H₂), 36.88 (*C*H₂), 36.85 (*C*H), 36.76 (*C*H), 36.65 (*C*H), 36.55 (*C*H₂), 36.38 (*C*H₂), 36.36 (*C*H), 36.33 (*C*H₂), 36.28 (*C*H₂), 36.20 (*C*H), 36.09 (*C*H), 36.05 (*C*H₂), 35.44 (*C*H₂), 35.27 (*C*H₂), 35.14 (*C*H₂), 35.10 (*C*H₂), 35.03 (*C*H₂), 34.94 (*C*H₂), 33.80 (*C*H₂), 33.73 (*C*H₂), 33.70 (*C*H₂), 33.64 (*C*H₂), 33.28 (*C*H₂), 33.25 (*C*H₂), 30.84 (*C*H₂), 30.82 (*C*H₂), 30.76 (*C*H₂), 30.66 (*C*H₂), 30.60 (*C*H₂), 30.47 (*C*H₂), 29.85 (*C*H₂), 29.54 (*C*H₂), 29.47 (*C*H₂), 29.18 (*C*H₂), 28.55 (*C*H₂), 28.32 (*C*H₂), 25.09 (*C*H₂), 24.90 (*C*H₂), 24.87 (*C*H₂), 24.78 (*C*H₂), 23.65 (*C*H₂), 23.25 (*C*H₂), 22.98 (*C*H₂), 22.91 (*C*H₂), 13.59 (*C*H₃), 13.24 (*C*H₃), 13.14 (*C*H₃), 13.08 (*C*H₃), 12.95 (*C*H₃), 12.89 (*C*H₃), 11.73 (*C*H₃), 11.72 (*C*H₃).

**GC-MS**: *m*/*z* = 180, 150, 136, 107, 91, 79, 55.

### Example 1b: Hydrogenation with RANEY^{®}-Ni in toluene/H₂O

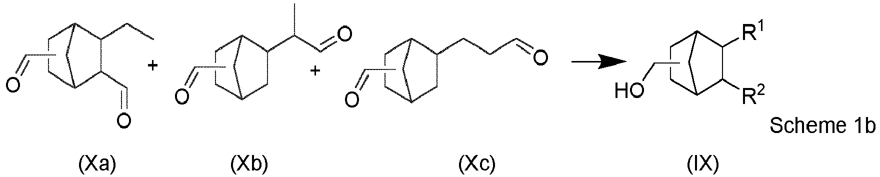

Various amounts of the hydroformylation reaction product of (II) and various amounts of RANEY ^{®}-Ni and water were added to the reaction mixture (table 1) obtained in example 1a. The autoclave was subsequently flushed with 5 MPa of Hz three times and finally repressurized with 50 MPa of Hz at room temperature. The reaction mixture was stirred for various amounts of time at different reaction temperatures (table 1). After letting the autoclave cool down to room temperature the resulting reaction mixture was redissolved in EtOAc and filtered to remove the nickel. The solvents were removed by condensation and the product was purified by distillation (b.p: 105-120 °C, reduced pressure: 5 Pa) to yield 3.09 g (16.74 mmol, 67%) of (IX) as a mixture of diols of formulae (IXa) to (IXf) as a colorless viscous liquid.

**Table 1: Varied reaction parameters for the hydrogenation of the reaction mixture obtained in example 1a with RANEY^{®}-Ni as catalyst in toluene/H₂O.**

| **#** | **w%(Ni** | **w%(H₂O** | **(II)** | **T [°C]** | **Δp [MPa]** | **time [h]** | **yield** | **full** |
|---|---|---|---|---|---|---|---|---|
| **1** | 2 | 10 | 24.96 | r.t. | 0.5 | o.n. | n.d. | No |
| **2** | 2 | 10 | 24.96 | 40 | 0.6 | o.n. | 45 | Yes |
| **3** | 2 | 10 | 24.96 | 60 | 0.75 | o.n. | n.d. | No |
| **4** | 2 | 10 | 24.96 | 80 | 9 | o.n. | 66 | Yes |
| **5** | 2 | 10 | 24.96 | 100 | 10 | o.n. | 66 | Yes |
| **6** | 2 | 10 | 24.96 | 120 | 9 | 14 | n.d. | No |
| **7** | 2 | 10 | 24.96 | 140 | 10 | 4.5 | 67 | Yes |
| **8** | 4 | 10 | 416.0 | 140 | 35 | o.n. | 77 | Yes |
| **9** | 4 | 20 | 24.96 | 140 | 20 | 9 | 47 | yes |

| | | | | | | | | |
|---|---|---|---|---|---|---|---|---|
| w%(H₂O) and w%(Ni) are referred to the reaction feed which has been applied in the first hydroformylation step o.n. = over night ( ≥ 20 h) r.t. = room temperature (II) gives the amount of (II) used in in the corresponding examples 1a. Δ p gives the pressure decrease during the reaction. full: yes = conversion complete, no = conversion incomplete | | | | | | | | |

The diols obtained in # 2, 4, 5 and 7 were collected and used together in example 8.

### Example 1c: Reduction with NaBH₄ in MeOH:

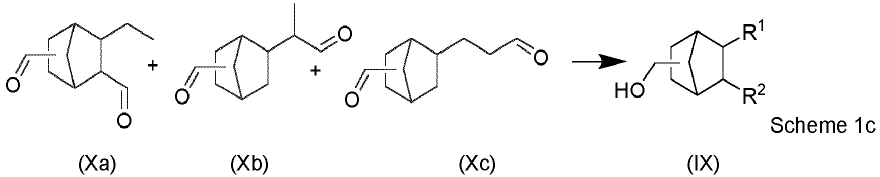

After the hydroformylation reaction of (II) 125 mL MeOH (0.20 M) were added to the reaction mixture obtained in example 1a which was cooled down subsequently to a temperature of 0 °C. 2.83 g (74.9 mmol, 3.00 eq.) of NaBH₄ were added in portions and the resulted mixture was stirred at room temperature for 3 h. Afterwards, the reaction mixture was reduced to halve of its volume and the solution was acidified with hydrochloric acid (37 wt%, 1.00 M) until a pH value of 6 to 7 was reached. The organic phase was extracted with DCM (3 × 100 mL), dried over Na₂SO₄, filtered and the remained solvent was removed under reduced pressure. The product was purified by silica gel chromatography with *n*-pentane and EtOAc, using 10-50% EtOAc as gradient to yield 3.49 g (19.40mmol, 73%) of (IX) as a mixture of diols of formulae (IXa) to (IXf) as a colorless viscous liquid.

**¹H NMR (500 MHz, CDCl₃, 298 K):** *δ* (ppm) = 3.70-3.54 (m, 1.43 H, C*H*₂OH), 3.46-3.26 (m, 2.57 H, C*H*₂OH), 2.23-2.06 (m, 1.80 H), 2.04-1.87 (m, 0.47 H), 1.86-1.70 (m, 0.61 H), 1.70-0.83 (m, 11 H), 0.83-0.54 (m, 0.53 H).

In view of the big overlap of the aliphatic proton signals in the ¹H-NMR spectrum, only the resonances of the signals of the CH₂ groups next to the hydroxy groups can be assigned.

**¹³C NMR (400 MHz, CDCl₃**, **298 K):** *δ* (ppm) = 68.12 (*C*H₂OH), 67.95 (*C*H₂OH), 67.92 (*C*H₂OH), 67.39 (*C*H₂OH), 67.20 (*C*H₂OH), 67.01 (*C*H₂OH), 66.96 (*C*H₂OH), 66.96 (*C*H₂OH), 66.93 (*C*H₂OH), 66.92 (*C*H₂OH), 66.90 (*C*H₂OH), 66.71 (*C*H₂OH), 66.62 (*C*H₂OH), 66.47 (*C*H₂OH), 66.44 (*C*H₂OH), 66.40 (*C*H₂OH), 66.31 (*C*H₂OH), 63.30 (*C*H₂OH), 63.25 (*C*H₂OH), 63.23 (*C*H₂OH), 63.19 (*C*H₂OH), 52.88 (*C*H), 52.04 (*C*H), 46.16 (*C*H), 46.04 (*C*H), 45.68 (*C*H), 45.64 (*C*H), 45.59 (*C*H), 45.57 (*C*H), 45.36 (*C*H), 45.33 (*C*H), 45.24 (*C*H), 45.23 (*C*H), 44.63 (*C*H), 44.54 (*C*H), 44.34 (*C*H), 44.13 (*C*H), 43.05 (*C*H), 43.02 (*C*H), 43.00 (*C*H), 42.52 (*C*H), 42.24 (*C*H), 41.70 (*C*H), 41.55 (*C*H), 41.12 (*C*H), 41.05 (*C*H), 40.89 (*C*H), 40.82 (*C*H), 40.75 (*C*H), 40.66 (*C*H), 40.45 (*C*H), 40.25 (*C*H), 40.18 (*C*H), 40.14 (*C*H), 40.11 (*C*H), 39.67 (*C*H), 39.28 (*C*H), 39.12 (*C*H), 39.00 (*C*H), 38.95 (*C*H), 38.69 (*C*H), 38.66 (*C*H), 38.57 (*C*H), 38.54 (*C*H), 38.47 (*C*H), 38.46 (*C*H), 38.40 (*C*H), 38.31 (*C*H₂), 38.03 (*C*H), 37.62 (*C*H), 37.53 (*C*H₂), 37.48 (*C*H₂), 37.10 (*C*H), 37.06 (*C*H), 36.99 (*C*H), 36.96 (*C*H), 36.91 (*C*H₂), 36.89 (*C*H₂), 36.65 (*C*H), 36.62 (*C*H₂), 36.60 (*C*H), 36.54 (*C*H), 36.48 (*C*H₂), 36.39 (*C*H), 36.37 (*C*H₂), 36.34 (CH), 36.31 (*C*H), 36.23 (*C*H₂), 36.16 (*C*H₂), 36.04 (*C*H₂), 35.61 (*C*H₂), 35.41 (*C*H₂), 34.88 (*C*H₂), 34.87 (*C*H₂), 34.85 (*C*H₂), 34.74 (*C*H₂), 34.42 (*C*H₂), 34.38 (*C*H₂), 33.96 (*C*H₂), 33.81 (*C*H₂), 33.25 (*C*H₂), 33.16 (*C*H₂), 33.04 (*C*H₂), 32.91 (*C*H₂), 32.89 (*C*H₂), 32.67 (*C*H₂), 32.59 (*C*H₂), 32.50 (*C*H₂), 32.31 (*C*H₂), 32.28 (*C*H₂), 32.07 (*C*H₂), 31.91 (*C*H₂), 31.28 (*C*H₂), 31.19 (*C*H₂), 28.90 (*C*H₂), 28.25 (*C*H₂), 27.42 (*C*H₂), 27.15 (*C*H₂), 27.11 (*C*H₂), 26.68 (*C*H₂), 24.87 (*C*H₂), 24.17 (*C*H₂), 16.79 (*C*H₃), 16.53 (*C*H₃), 16.40 (*C*H₃), 16.29 (*C*H₃), 16.24 (*C*H₃), 16.18 (*C*H₃), 14.98 (*C*H₃), 14.68 (*C*H₃), 13.25 (*C*H₃), 13.23 (*C*H₃).

**GC-MS:** *m*/*z* = 184, 166, 135, 107, 95, 79, 67, 55.

### Example 2: Preparation of a mixture of diols of formulae (IXc) and (IXd) starting from VNB formula (VI)

### Example 2a: Preparation of dialdehyds according to scheme 1a as 1^{st} step

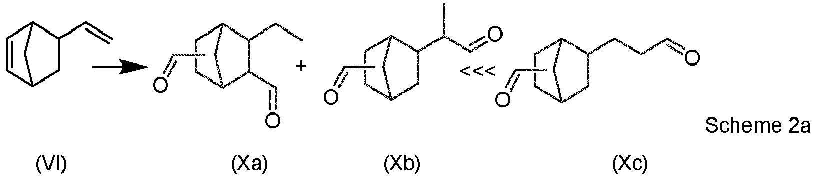

10.14 mg (24.96 pmol, 0.10 mol%) of [Rh(COD)₂]BF₄ and 21.60 mg (27.46 pmol, 0.11 mol%) of Oxophos^{®} (XII) were dissolved in 25 mL toluene (1.00 M) in a snap-cap vial in an autoclave. To the solution 3.00 g (24.96 mmol, 1.00 eq.) of VNB (formula (VI)) was added. The reaction mixture was heated up to 80 °C, subsequently pressurized with 5 MPa of syngas (CO/H₂ = 3:2), heated further to 140 °C and stirred for 4 h at a reaction temperature of 140 °C. The resulted pale yellow solution was cooled down to room temperature and was either used directly for hydrogenation or the solvent was removed by condensation whereas the product was purified by distillation (b.p.: 74-76 °C, reduced pressure: 3.5 Pa) to yield 1.25 g (3.45 mmol,14 %) of a dialdehyde of formula (Xc) as a colorless liquid.

**¹H NMR (500 MHz, CDCl₃, 298 K)**: *δ* (ppm) = 9.76-9.71 (m, 1 H, *C*HO), 9.62-9.57 (m, 1 H, *C*HO), 2.58-2.51 (m, 0.50 H), 2.49 (d, ³*J* = 4.8 Hz, 0.50 H), 2.31-2.18 (m, 2 H), 2.05 (d, ³*J* = 4.2 Hz, 0.15 H), 1.95-1.83 (m, 1.50 H), 1.82-1.70 (m, 1.50 H), 1.69-1.54 (m, 2.50 H), 1.54-1.39 (m, 1 H), 1.32-1.13 (m, 2.50 H), 1.13-1.07 (m, 0.30 H), 1.07-0.98 (m, 0.60 H), 0.72 (ddd, ³*J* = 4.8 Hz, 0.40 H), 0.65 (ddd, ³*J* = 5.1 Hz 0.30 H).

In view of the big overlap of the aliphatic proton signals in the ¹H-NMR spectrum, only the resonances of the signals of the aldehyde protons can be assigned.

**¹³C NMR** (400 MHz, CDCl₃, 298 K): *δ* (ppm) = 203.70 (*C*HO), 203.18 (*C*HO), 202.96 (*C*HO), 202.89 (*C*HO), 202.57 (*C*HO), 202.47 (*C*HO), 202.44 (*C*HO), 202.23 (*C*HO), 55.06 (*C*H), 54.79 (*C*H), 53.86 (*C*H), 47.63 (*C*H), 43.10 (*C*H₂), 43.04 (*C*H₂), 42.46 (*C*H), 42.32 (*C*H₂), 41.63 (*C*H), 41.58 (*C*H), 41.50 (*C*H), 40.76 (*C*H), 39.46 (*C*H), 39.43 (*C*H), 39.08 (*C*H), 38.70 (*C*H), 38.37 (*C*H), 37.67 (*C*H₂), 37.56 (*C*H₂), 37.50 (*C*H₂), 37.45 (*C*H₂), 36.82 (*C*H), 36.52 (*C*H₂), 36.33 (*C*H), 36.30 (*C*H₂), 33.24 (*C*H₂), 33.22 (*C*H₂), 30.62 (*C*H₂), 30.56 (*C*H₂), 29.44 (*C*H₂), 28.52 (*C*H₂), 28.29 (*C*H₂), 24.87 (*C*H₂), 24.74 (*C*H₂), 22.88 (*C*H₂).

**GC-MS:** *m*/*z* = 180, 150, 136, 107, 91, 79, 55.

### Example 2b: Hydrogenation with RANEY^{®}-Ni in toluene/H₂O

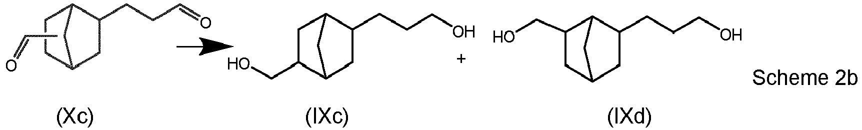

After the hydroformylation reaction of (VI) various amounts of 2 wt% RANEY^{®}-Ni and 10 wt% water (based on the total mass of the reaction mixture) were added to the reaction mixture obtained in example 2a. The autoclave was subsequently flushed with 5 MPa of Hz three times and finally repressurized with 5 MPa of Hz at room temperature. The reaction mixture was stirred for 3 hours at a temperature of 80 °C. After letting the autoclave cool down to room temperature a pressure of 4.7 MPa was observed. The resulting product in the reaction mixture was redissolved in EtOAc and filtered to remove the nickel. The solvents were removed by condensation and the product was purified through distillation under reduced pressure (b.p: 130 °C, partial pressure: 8 Pa) to yield 0.99 g (5.49 mmol, 22%) of (IX) as a mixture mainly consisting of (IXc) and (IXd) as a colorless viscous liquid.

### Example 2c: Reduction with NaBH₄ in MeOH:

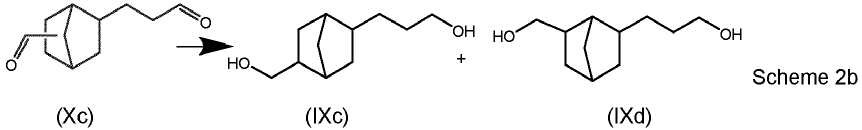

After the hydroformylation reaction of (VI) 125 mL MeOH (0.20 M) were added to the reaction mixture obtained in example 2a which was cooled down subsequently to a temperature of 0°C. 2.83 g (74.9 mmol, 3.00 eq.) of NaBH₄ were added in portions and the resulted mixture was stirred at room temperature for 3 h. Afterwards, the reaction mixture was reduced to halve of its volume and the solution was acidified with hydrochloric acid (37 wt%, 1.00 M) until a pH value of 6 to 7 was reached. The organic phase was extracted with DCM (3 × 100 mL), dried over Na₂SO₄, filtered and the remained solvent was removed under reduced pressure. The product was purified by silica gel chromatography with *n*-pentane and EtOAc, using 10-50% EtOAc as gradient to yield 2.02 g (10.98 mmol, 44%) of (IX) as a mixture of (IXc) and (IXd) as a colorless viscous liquid.

**¹H NMR (500 MHz, CDCl₃**, **298 K):** *δ* (ppm) = 3.61 (q, ³*J* = 6.5 Hz, 2 H, *C*HzOH), 3.38-3.30 (m, 2 H), 2.19-2.07 (m, 2 H), 1.95-1.92 (m, 0.75 H), 1.85-1.75 (m, 2 H), 1.67 (ddd, ³*J* = 8.5 Hz, 0.50 H), 1.57-1.49 (m, 4 H), 1.24-1.17 (m, 1.40 H), 1.16-1.10 (m, 1 H), 1.07-1.01 (m, 0.50 H), 1.01-0.95 (m, 0.50 H), 0.89-0.80 (m, 1 H), 0.65-0.61 (m, 0.30 H), 0.59-0.55 (m, 0.20 H).

In view of the big overlap of the aliphatic proton signals in the ¹H-NMR spectrum, only the resonances of the signals of the CH₂ groups next to the hydroxy groups can be assigned.

**¹³C NMR (400 MHz, CDCl₃**, **298 K)**: *δ* (ppm) = 66.92 (*C*HzOH), 66.88 (*C*HzOH), 66.79 (*C*HzOH), 66.61 (*C*HzOH), 63.20 (*C*HzOH), 63.15 (*C*HzOH), 63.13 (*C*HzOH), 63.08 (*C*HzOH), 45.60 (*C*H), 45.29 (*C*H), 44.30 (*C*H), 42.99 (*C*H), 41.68 (*C*H), 41.47 (*C*H), 41.10 (*C*H), 40.25 (*C*H), 40.24 (*C*H), 40.07 (*C*H), 39.65 (*C*H), 38.98 (*C*H), 38.51 (*C*H), 38.29 (*C*H₂), 37.52 (*C*H₂), 37.46 (*C*H₂), 36.92 (*C*H), 36.88 (*C*H₂), 36.83 (*C*H₂), 36.62 (*C*H₂), 36.55 (*C*H), 36.37 (*C*H), 34.71 (*C*H₂), 34.41 (*C*H₂), 33.24 (*C*H₂), 32.87 (*C*H₂), 32.66 (*C*H₂), 32.28 (*C*H₂), 32.24 (*C*H₂), 32.05 (*C*H₂), 31.88 (*C*H₂), 31.25 (*C*H₂), 31.17 (*C*H₂), 28.89 (*C*H₂), 28.25 (*C*H₂), 27.09 (*C*H₂).

**GC-MS:** *m*/*z* = 184, 166, 135, 107, 95, 79, 67, 55.

### Example 3: Preparation of a mixture of diols of formulae (IXa) and (IXb)

The diol was prepared according to the following scheme 3

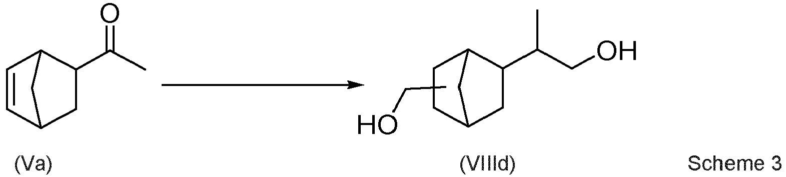

### Example 3a: 1^{st} step according to Scheme 3a

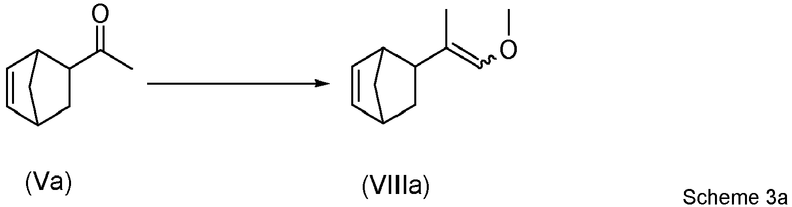

The reaction was performed using Schlenk technique (Schlenk flask). To a suspension of 16.4 g (47.7 mmol, 1.30 eq.) phosphonium salt [Ph₃PCH₂OCH₃]Cl (Methoxymethylidene(triphenyl)-λ⁵-phosphane, from Sigma Aldrich, CAS: 4009-98-7) in dried THF (239 mL) 6.18 mg (55.1 mmol, 1.50 eq.) of potassium *tert*-butanolate (KO*t*Bu) was added in portions at a temperature of 0°C. The deep red reaction mixture was stirred at 0 °C for 45 min and subsequently, 5.00 g (37.3 mmol, 1.00 eq.) of (Va) in THF (187 mL) was added dropwise via a cannula. The reaction mixture was stirred for 2 h at ambient temperature. To the orange suspension distilled water (300 mL) was added and the organic phase was extracted with *n*-pentane (3 × 150 mL). The collected organic phase was washed with water and NH₄Cl, dried over Na₂SO₄, filtered and the solvent was removed *in vacuo.* Finally, the crude product was purified with silica gel column chromatography (*n*-pentane/Et₂O = 50/1) to yield 6.01 g (36.6 mmol, 98%) of (VIIIa) as a colorless liquid.

**¹H NMR (400 MHz, CDCl₃):** δ (ppm) = 6.22-5.83 (m, 2 H), 5.83-5.60 (m, 1 H), 3.57-3.50 (m, 3 H), 2.88-2.62 (m, 2 H), 1.88 (dd, ³J = 8.5, 4.9 Hz, 1 H), 1.64-1.52 (m, 3 H), 1.45-1.22 (m, 4 H).

**¹³C NMR (400 MHz, CDCl₃):**

**VIIIa) (major)**: δ (ppm) = 141.54, 137.49, 136.80, 117.67 59.41, 46.10, 45.58, 42.57, 42.22, 30.74, 13.49.

Due to the higher number of isomer compounds resulted from the olefination of (Va) only the major product is presented.

**GC-MS:** *m*/*z* = 164, 131, 115, 98, 91, 83, 55.

### Example 3b: 2^{nd} step according to scheme 3b

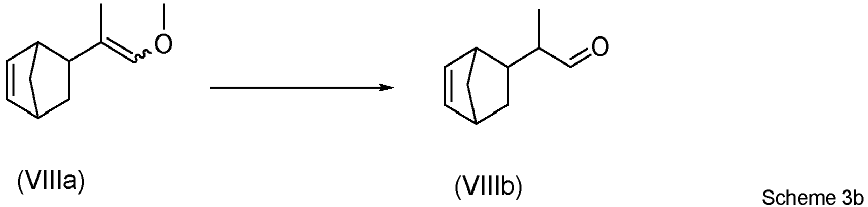

6.01 g (36.6 mmol, 1.00 eq.) of the product (Villa) obtained in example 3a was dissolved in toluene (73 mL) and water (6.60 mL, 10.0 eq.) was added. The solution was cooled to a temperature of 0 °C and 1.40 g (7.32 mmol, 0.20 eq.) of *p*-toluene sulfonic acid monohydride (*p*-TsOH × H₂O) was added in portions. The reaction mixture was refluxed for 1 h and after cooling down to ambient temperature saturated NaHCOs solution was added. The organic phase was extracted with EtzO (3 × 150 mL), dried over Na₂SO₄, filtered and the solvent was removed *in vacuo.* Finally, the product was purified by silica gel chromatography (*n*-pentane/Et₂O = 10/1) to yield 4.34 g (28.9 mmol, 79 %) of the product of formula (VIIIb) as a colorless liquid. Three different isomers were identified in the NMR spectra.

### ¹H NMR (400 MHz, CDCl₃):

**VIIIb-1 (major):** δ (ppm) = 9.56 (d, ³*J* = 3.1 Hz, 1 H, C*H*O), 6.14-5.89 (m, 2 H), 2.75-2.56 (m, 2 H). 2.15 (dddp, ³*J* = 13.9, 10.6, 6.8, 3.6 Hz, 1 H), 1.37-1.20 (m, 5 H), 1.14 (d, ³*J* = 6.8 Hz, 3 H, C*H*₃).
**VIIIb-2 (major):** δ (ppm) = 9.59 (d, ³J = 3.6 Hz, 1 H, C*H*O), 6.14-5.89 (m, 2 H), 2.86-2.80 (m, 2 H), 2.15 (dddp, ³J = 13.9, 10.6, 6.8, 3.6 Hz, 1 H), 1.37-1.20 (m, 5 H), 1.08 (d, ³J = 6.9 Hz, 3 H, C*H*₃).
**VIIIb-3 (minor):** δ (ppm) = 9.63 (d, ³*J* = 3.1 Hz, 0.10 H, C*H*O), 1.00 (d, ³*J* = 6.8, 0.35 H, C*H*₃). **¹³C NMR (400 MHz, CDCl₃):**
**VIIIb-1 (major):** δ (ppm) = 204.91 (*C*HO), 52.01, 45.32, 43.56, 42.31, 40.11, 31.38, 13.04 (*C*H₃).
**VIIIb-2 (major):** δ (ppm) = 205.23 (*C*HO), 51.66, 45.51, 44.75, 41.92, 40.32, 30.41, 13.47 (*C*H₃).
**VIIIb*-*3 (minor):** δ (ppm) = 205.30 (*C*HO), 50.86, 49.66, 44.50, 42.48, 41.92, 41.15, 30.41, 25.89, 13.33 (*C*H₃).

**GC-MS:** *m*/*z* = 150, 132, 117, 106, 94, 79, 66, 55.

### Example 3c: 3^{rd} step according to scheme 3c

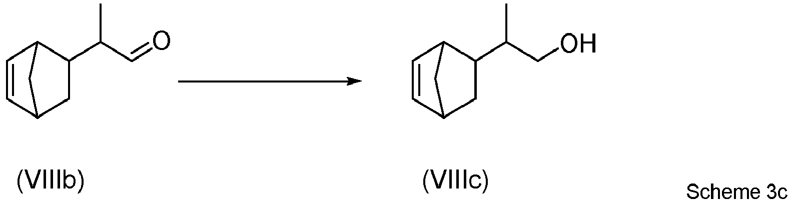

The step was preformed using a round-bottomed flask. 4.34 g (28.9 mmol, 1.00 eq.) of the product (Vlllb) obtained in example 3b was dissolved in MeOH (142 mL) and the reaction mixture was cooled to a temperature of 0 °C. 1.09 g (28.9 mmol, 1.00 eq.) of NaBH₄ was added in portions to the solution and the reaction mixture was stirred for 2 h. The resulted mixture was reduced to halve of its volume and the solution was acidified with hydrochloric acid (37 wt%, 1.00 M) until a pH value of 6-7 was reached. The organic phase was extracted with DCM (3 × 100 mL), dried over Na₂SO₄, filtered and the remained solvent was removed under reduced pressure. The product was purified by silica gel chromatography (*n*-pentane/Et₂O = 8/2) to yield 4.09 g (26.9 mmol, 93%) of product of formula (Vlllc) as a colorless liquid.

**¹H NMR (400 MHz, CDCl₃):** δ (ppm) = 6.05 (ddd, ³*J* = 5.7, 2.9 Hz, 2 H, C*H*O), 3.75 (ddd, ³*J* = 25.1, 10.5, 3.7 Hz, 1 H), 3.50 (dd, ³*J* = 10.6, 6.8 Hz, 0.5 H), 3.37 (dd, ³*J* = 10.5, 7.3 Hz, 0.5 H), 2.84-2.73 (m, 2 H), 1.44 (dtq, ³*J* = 13.7, 6.9, 3.3 Hz, 1 H), 1.33-1.24 (m, 5 H), 1.06 (d, ³*J* = 6.5 Hz, 1.5 H, C*H*₃), 0.99 (d, ³*J* = 6.7 Hz, 1.5 H, C*H*₃).

**¹³C NMR (400 MHz, CDCl₃):**
**VIIIc-1**: δ (ppm) = 136.59, 67.88, 45.29, 43.75, 42.13, 41.88, 41.27, 31.90.
**VIIIc-2:** δ (ppm) = 137.1 (d), 67.51, 45.65, 43.83, 42.21, 41.82, 40.76, 31.65.

The ¹³C NMR reveal three isomer compounds and the two major isomers of **VIIIc** are presented so far.

**GC-MS:** *m*/*z* = 152, 134, 119, 105, 91, 77, 66, 55.

### Example 3d: 4^{th} step according to scheme 3d

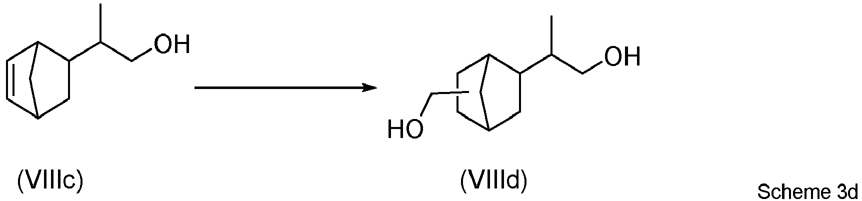

This step was performed in a manual autoclave using Schlenk technique. 109 mg (269 µmol, 1.00 mol%.) of [Rh(COD)₂]BF₄ and 794 mg (1.34 mmol, 5.00 mol%) of PEts (20 wt% in EtOH) were dissolved in EtOH (16 mL), and 4.09 g (26.9 mmol, 1.00 eq.) of the product (VIIIc) obtained in

example 3c was added to the suspension. The reaction mixture was pressurized with 5 MPa of syngas (CO/H₂ = 1/1) and stirred for 16 h at a reaction temperature of 60 °C. The resulted dark red reaction mixture was cooled to room temperature and the solvent was removed via distillation *in vacuo.* The crude product was purified by silica gel column chromatography (*n*-pentane/Et₂O = 1/1) and after removal of the solvent 3.82 g (20.7 mmol, 77%) of (Vllld), a mixture of (IXa) and (IXb) was yielded as a colorless viscous liquid. The two different isomers were identified in the NMR spectra.

### ¹H NMR (400 MHz, CDCl₃):

**VIIId-1**: δ (ppm) = 3.73-3.58 (m, 1 H, *C*H₂O), 3.45-3.29 (m, 3 H, C*H*₂O), 2.24-2.09 (m, 2 H), 1.67-1.57 (m, 1 H), 1.45-1.15 (m, 7 H), 1.04-0.96 (m, 3 H, C*H*₃), 0.88 (d, ³*J* = 6.7 Hz, 0.66 H).
**VIIId-2:** δ (ppm) = 3.75-3.60 (m, 1 H, *C*H₂O), 3.54-3.33 (m, 3 H, *C*H₂O), 2.26-2.15 (m, 2 H), 1.70-1.49 (m, 2 H), 1.44-1.29 (m, 3.5 H), 1.29-1.14 (m, 2.8 H), 1.02-0.94 (m, 1 H), 0.92 (d, ³*J* = 6.5 Hz, 0.88 H, C*H*₃), 0.89 (d, ³J = 6.5 Hz, 1.4 H, C*H*₃).

**GC-MS:** *m*/*z* = 184, 166, 153, 135, 125, 107, 95, 79, 67, 55.

### Example 4: Preparation of the intermediate of formula (VII)

The intermediate was prepared according to the following scheme 4

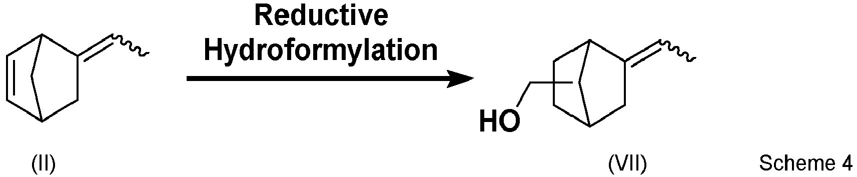

16.9 mg (41.6 µmol, 0.10 mol%) of [Rh(COD)₂]BF₄ (bis(1,5-cyclooctadiene) rhodium (I) tetrafluoroborate, CAS: 35138-22-8, from Tokyo Chemical Industry Co., Ltd.) and 123 mg (208 µmol, 0.50 mol%) of TEP (20 wt% in EtOH) were dissolved in EtOH (24 mL), and 5.00 g (41.6 mmol, 1.00 eq.) of 5-ethylidene-2-norbonene (ENB) was added to the suspension. The reaction mixture was pressurized with 5 MPa of syngas (CO/H₂ = 1/1) and stirred for 17 h at 100 °C. The yellowish reaction mixture was cooled to room temperature and the solvent was removed via distillation at room temperature *in vacuo.* The crude product was purified by silica gel column chromatography (EtzO) and after removal of the solvent 5.82 g (38.2 mmol, 92%) of the intermediate of formula (VII) was yielded as a colorless liquid, comprising the (*E*)-isomer (formula (VIIa) as major part and the (*Z*)-isomer (formula Vllb) as minor part.

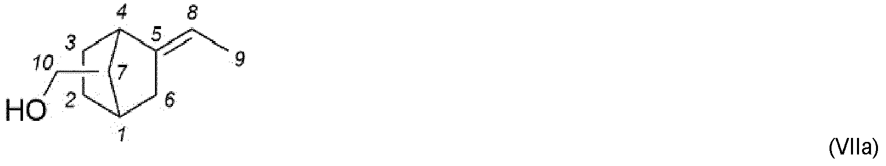

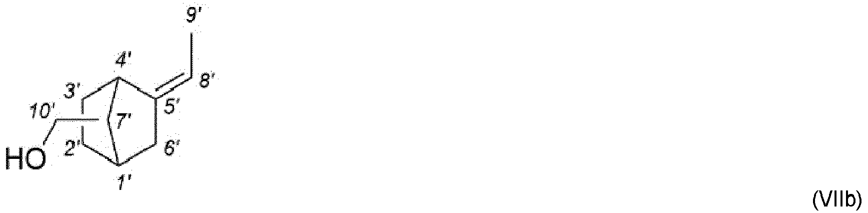

### ¹H NMR (400 MHz, CDCl₃):

**(VIIa) major:** *δ* (ppm) = 5.27 (dqd, ³*J* = 6.5 Hz, 0.76 H, H-8), 3.38 (dd, ³*J* = 6.9, 2 H, H-10), 1.50 (d, ³*J* = 6.8 Hz, 3 H, H-9)
**(*V*IIb) minor:** *δ* (ppm) = 5.05 (dq, ³*J* = 7.0 Hz, 0.24 H, H-8`), 3.38 (dd, ³*J* = 6.9 Hz, 2 H, H-10`), 1.62 (tt, ³*J* = 7.1 Hz, 0.64 H, H-9`)

2.92 (d, ³*J* = 3.8 Hz, 0.20 H), 2.59 (t, ³*J* = 7.7 Hz, 0.75 H), 2.40-2.29 (m, 0.87 H), 2.28-2.19 (m, 0.16 H), 2.12 (tq, ³*J* = 21.2, 16.2, 5.0, 2.6 Hz), 1.88-1.66 (m, 2.17 H), 1.62 (tt, ³*J* = 7.1, 2.0 Hz, 0.64 H), 1.48-1.38 (m, 1 H), 1.38-1.29(m, 1 H), 1.24 (t, ³*J* = 8.2 Hz, 1 H), 1.09 (ddt, ³*J* = 12.5, 8.0, 4.1 Hz, 1 H).

### ¹³C NMR (400 MHz, CDCl₃):

**(VIIa) major:** *δ* (ppm) = 145.89 (C-5), 145.88 (C-5), 111.88 (C-8), 111.44 (C-8), 66.93 (C-10), 66.51 (C-10), 14.01 (C-9), 13.95 (C-9), 47.00 (*C*H), 45.12 (*C*H), 45.03 (*C*H), 44.41 (*C*H), 38.40 (CH), 36.41 (CH), 36.17 (*C*H₂), 35.89 (*C*H₂), 35.84 (*C*H₂), 35.13 (*C*H₂), 34.15 (*C*H₂), 33.14 (*C*H₂).
**(VIIb) minor:** *δ* (ppm) = 145.03 (C-5'), 144.97 (C-5'), 112.67 (C-8'), 112.02 (C-8'), 66.95 (C-10'), 66.47 (C-10'), 14.58 (C-9'), 14.56 (C-9'), 44.44 (*C*H), 44.18 (*C*H), 41.47 (*C*H), 39.67 (*C*H), 38.99 (*C*H₂), 38.32, 38.23 (*C*H₂), 36.33, 36.00 (*C*H₂), 35.52 (*C*H₂), 33.28 (*C*H₂), 32.90 (*C*H₂).

Due to the large overlap of the aliphatic signals, only the resonances of the characteristic methyl-, methylidene and ethylidene group could be assigned. In addition, no clear differentiation in regio-isomers or diastereomers could be provided.

**GC-MS:** *m*/*z* = 152, 134, 121, 108, 93, 79, 67.

### Example 5: Preparation of a diol of formula (I)

The diol was prepared according to the following scheme 5

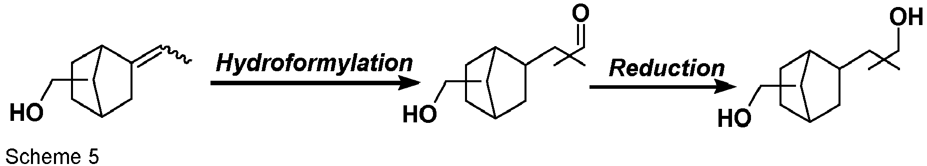

13.3 mg (32.8 µmol, 0.10 mol%) of [Rh(COD)₂]BF₄ and 106 mg (164 µmol, 0.50 mol%) of Alkanox^{®} were dissolved in toluene (66 mL, 0.50 M) and 5.00 g (32.8 mmol, 1.00 eq.) of the intermediate obtained in example 4 was added to the suspension. The reaction mixture was pressurized with 5 MPa of syngas (CO/H₂ = 1/1) and stirred for 18 h at 100 °C. The yellowish reaction mixture was cooled to room temperature and dissolved in MeOH (164 mL, 0.20 M) and 3.72 g (98.4 mmol, 3.00 eq.) of NaBH₄ was added in portions at a temperature of 0 °C. The reaction mixture was stirred for 16 h at ambient temperature. The resulted mixtures was reduced to half of its volume *in vacuo* and an aqueous HCl solution (37 wt%, 100 mL) was added. The organic phase was extracted with DCM (3 × 150 mL) and dried over Na₂SO₄, filtered and the solvent was removed *in vacuo.* The crude product was purified by silica gel chromatography (DCM/Et₂O = 3/1 and EtOAc) and after removal of the solvent 3.42 g (18.6 mmol, 56 %) of a mixture of compounds of formula (I) was yielded as a colorless viscous liquid.
**(I) ¹H NMR (400 MHz, CD₂Cl₂):** *δ* (ppm) = 3.68-3.53 (m, 1.20 H, C*H*₂OH), 3.44-3.21 (m, 2.80 H, C*H*₂OH).
**(I) ¹³C NMR (400 MHz, CD₂Cl₂):** *δ* (ppm) = 67.73 (*C*H₂OH), 66.71 (*C*H₂OH), 66.53 (*C*H₂OH), 66.50 (*C*H₂OH), 66.47(*C*H₂OH), 66.14 (*C*H₂OH), 62.98 (*C*H₂OH), 62.97 (*C*H₂OH).
Due to the large overlap of the aliphatic signals, only the resonances of the characteristic aldehyde and methylidene group could be assigned.
**(Aldehyde intermediate) GC-MS:** *m*/*z* = 182, 164, 123, 107, 93, 79, 67, 55.
**(I) GC-MS:** *m*/*z* = 184, 166, 153, 135, 125, 107, 93, 79, 67, 55.

### Example 6: Preparation of a diol of formula (I)

The diol was prepared according to the following scheme 6

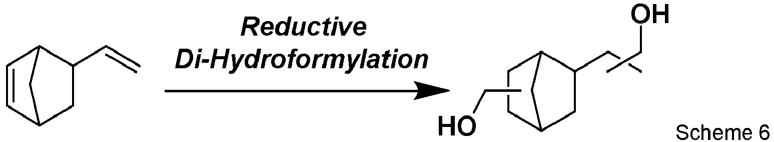

84.5 mg (208 µmol, 1.00 mol%) of [Rh(COD)₂]BF₄ and 614 mg (1.04 mmol, 5.00 mol%) of TEP (20 wt% in EtOH) were dissolved in EtOH (12 mL) and 2.50 g (20.8 mmol, 1.00 eq.) of 5-vinyl-2-norbonene (VNB) was added to the suspension. The reaction mixture was pressurized with 5 MPa of syngas (CO/H₂ = 1/1) and stirred for 18 h at 100 °C. The yellowish reaction mixture was cooled to room temperature and the solvent was removed via distillation at room temperature *in vacuo.* The crude product was purified by silica gel chromatography (DCM/Et₂O = 3/1 and EtOAc) and after removal of the solvent 3.63 g (19.7 mmol, 95%) off a mixture of compounds of formula (I) was yielded as a colorless viscous liquid.

**¹H NMR (400 MHz, CDCl₃):** *δ* (ppm) = 3.70-3.55 (m, 1.70 H, C*H*₂OH), 3.44-3.26 (m, 2.30 H, C*H*₂OH).

**¹³C NMR (400 MHz, CDCl₃):** *δ* (ppm) = 68.16 (*C*H₂OH), 67.96 (*C*H₂OH), 67.94 (*C*H₂OH), 67.21 (*C*H₂OH), 67.02 (*C*H₂OH), 66.98 (*C*H₂OH), 66.94 (*C*H₂OH), 66.74 (*C*H₂OH), 63.32 (*C*H₂OH), 63.27 (*C*H₂OH), 63.26 (*C*H₂OH), 63.21 (*C*H₂OH).

Due to the large overlap of the aliphatic signals, only the resonances of the characteristic methylidene group could be assigned.

**GC-MS:** *m*/*z* = 184, 166, 153, 135, 125, 107, 93, 79, 67, 55.

### Example 7: hydroformylation using (SₐₓS,S)-bobphos

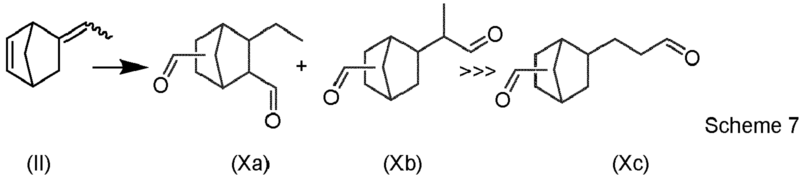

[Rh(COD)₂]BF₄, (*S*ₐₓ*S*,*S*)-bobphos (formula (XIII)) and ENB (II) were dissolved in 25 mL toluene (1.00 M) in a snap-cap vial in an autoclave (table 2). The autoclave was pressurized with 5 MPa of syngas (CO/H₂ = 1/1), subsequently heated to 60°C and stirred for 16 h. Afterwards the reaction mixture was cooled down to room temperature and the solvent was removed by condensation. The product was purified by distillation (b.p.: 65-70 °C, reduced pressure: 2.5 Pa) to yield 0.68 g (4.52 mmol, 18%) of (X) as a mixture of (Xa), (Xb), and (Xc) as a colorless liquid. The synthesis was performed with varied parameters given in table 2.

**Table 2: Overview of the used quantities for the iso-selective hydroformylation of (II) with [Rh(COD)₂]BF₄ and SₐₓS,S-bobphos (XIII).**

| (II) | | | [Rh(COD)₂]BF₄ | | | (*S*ₐₓ*S*,*S*)-bobphos (XIII) | | | H₂ usage |
|---|---|---|---|---|---|---|---|---|---|
| **#** | m [g] | n [mmol] | m [mg] | n [µmol] | mol% | m [mg] | n [µmol] | mol% | Δp [Pa] |
| **1** | 3.00 | 24.96 | 10.14 | 24.96 | 0.10 | 20.37 | 31.20 | 0.13 | 1.75 |
| **2** | 3.00 | 24.96 | 10.14 | 24.96 | 0.10 | 32.59 | 40.92 | 0.20 | 2.0 |
| **3** | 1.50 | 12.48 | 20.28 | 49.92 | 0.10 | 40.73 | 62.40 | 0.40 | 1.0 |
| **4** | 1.50 | 12.48 | 20.28 | 49.92 | 0.10 | 65.17 | 99.84 | 0.80 | 1.0 |

**¹H NMR (500 MHz, CDC13, 298 K):** δ (ppm) = 9.64-9.52 (m, 2 H, C*H*O), 2.63-2.51 (m, 1 H), 2.40 (bs, 0.25 H), 2.37-2.17 (m, 2 H), 2.17-2.14 (m, 0.30 H), 2.13-2.02 (m, 0.70 H), 2.00-1.73 (m, 2 H), 1.73-1.60 (m, 1 H), 1.59-1.46 (m, 1 H), 1.40-1.33 (m, 0.50 H), 1.33-1.14 (m, 3 H), 1.13-1.05 (m, 2 H), 1.03-0.98 (m, 1 H), 0.95-0.85 (m, 0.35 H), 0.85-0.78 (m, 0.15 H).

**¹³C NMR (400 MHz, CDC13, 298 K):** δ (ppm) = 204.87 (*C*HO), 204.81 (*C*HO), 204.67 (*C*HO), 204.63 (*C*HO), 204.51 (*C*HO), 204.48 (*C*HO), 204.40 (*C*HO), 203.05 (*C*HO), 202.98 (*C*HO), 202.92 (*C*HO), 202.86 (*C*HO), 202.84 (*C*HO), 202.81 (*C*HO), 202.58 (*C*HO), 202.52 (*C*HO), 202.51 (*C*HO), 202.42 (*C*HO), 202.14 (*C*HO), 201.91 (*C*HO), 201.73 (*C*HO), 66.81 (*C*H), 66.66 (*C*H), 61.37 (*C*H), 61.05 (*C*H), 55.14 (*C*H), 55.09 (*C*H), 54.77 (*C*H), 54.71 (*C*H), 53.88 (*C*H), 53.75 (*C*H), 53.66 (*C*H), 51.75 (*C*H), 51.55 (*C*H), 51.28 (*C*H), 51.10 (*C*H), 49.82 (*C*H), 49.69 (*C*H), 48.87 (*C*H), 48.82 (*C*H), 48.06 (*C*H), 47.70 (*C*H), 45.06 (*C*H), 44.95 (*C*H), 44.33 (*C*H), 44.03 (*C*H), 43.06 (*C*H), 43.05 (*C*H), 43.00 (*C*H), 42.86 (*C*H), 42.80 (*C*H), 42.57 (*C*H), 42.45 (*C*H), 41.89 (*C*H), 41.78 (*C*H), 41.18 (*C*H), 41.03 (*C*H), 40.75 (*C*H), 40.73 (*C*H), 40.46 (*C*H), 40.35 (*C*H), 40.17 (*C*H), 39.75 (*C*H), 39.59 (*C*H), 39.49 (*C*H), 38.61 (*C*H), 38.55 (*C*H), 38.52 (*C*H), 38.20 (*C*H), 38.15 (*C*H), 37.97 (*C*H), 37.75 (*C*H₂), 37.44 (*C*H₂), 36.91 (*C*H₂), 36.84 (*C*H₂), 36.72 (*C*H), 36.61 (*C*H), 36.34 (*C*H₂), 36.24 (*C*H₂), 36.16 (CH), 36.09 (*C*H₂), 36.05 (CH), 36.01 (*C*H₂), 35.22 (*C*H₂), 35.10 (*C*H₂), 35.06 (*C*H₂), 34.98 (*C*H₂), 34.90 (*C*H₂), 33.76 (*C*H₂), 33.69 (*C*H₂), 33.65 (*C*H₂), 33.59 (*C*H₂), 30.79 (*C*H₂), 30.71 (*C*H₂), 30.43 (*C*H₂), 29.49(*C*H₂), 29.14 (*C*H₂), 25.04 (*C*H₂), 23.61 (*C*H₂), 23.20 (*C*H₂), 22.94 (*C*H₂), 13.94 (*C*H₃), 13.88 (*C*H₃), 13.55 (*C*H₃), 13.19 (*C*H₃), 13.10 (*C*H₃), 13.04 (*C*H₃), 12.91 (*C*H₃), 12.86 (*C*H₃), 11.69 (*C*H₃), 11.68 (*C*H₃).

**GC-MS:** *m*/*z* = 180, 150, 136, 107, 91, 79, 55.

### Example 8: Preparation of polymer

The polycondensation reaction was performed in a three-necked flask, equipped with a magnetic coupling bmd 075 (Büchi AG) and a stainless steel propeller stirrer at normal pressure in normal atmosphere. For each polymerization 1.00 mol% of Ti(OnBu)₄ catalyst, 1.00 equivalent of dimethyl terephthalate (DMT) and 2.00 equivalents of the corresponding diols obtained in examples 1, 3, and 4 were added into the three necked flask and the temperature was adjusted to 160 °C. As soon as the methanol has started to split off the temperature was increased to 210 °C gradually. If necessary, the temperature will be increased further until the pre-condensation reaction is fully completed (until no further MeOH is formed). Finally, the reaction mixture was stirred overnight under reduced pressure until the remaining diols were collected, dissolved in DCM or THF, and precipitated in cold MeOH. It was observed that not only a colorless solid was obtained but also a fibrous residue. This fibrous residue was dissolved in THF and again precipitated in cold MeOH. If necessary, this step was repeated. In table 3 below the product obtained after the first precipitation is marked -1, the product obtained after the second precipitation is marked -2, and so on.

**Table 3: Evaluation of the diols obtained in examples 1, 2, 3, 5, and 6 for the polyester synthesis (Mₙ: number average molecular weight; M_{w}: weight average molecular weight; Ð_{M}: polydispersity index; T_{g}: glass transition temperature; T_{dec}: decomposition temperature).**

| Diol | Mₙ [kg/mol] | M_{W} [kg/mol] | *Ð_{M}* | T_{g} [°C] | T_{dec} [°C] |
|---|---|---|---|---|---|
| Example 1c-1 | 19 | 70 | 3.7 | 97 | 381 |
| Example 1c-2 | 17 | 82 | 4.7 | 96 | 369 |
| Example 1c-3 | 19 | 61 | 3.2 | 99 | 365 |
| Example 1b | 23 | 57 | 2.5 | 90 | 381 |
| Example 2 | 14 | 59 | 4.2 | 75 | 380 |
| Example 3-1 | 9 | 13 | 1.5 | 96 | 387 |
| Example 3-2 | 11 | 24 | 2.1 | 98 | 382 |
| Example 3-3 | 15 | 31 | 2.1 | 100 | 384 |
| Example 3-4 | 24 | 63 | 2.7 | 103 | 379 |
| Example 5-1 | 11 | 25 | 2.2 | 84 | 386 |
| Example 5-2 | 11 | 25 | 2.2 | 87 | 386 |
| Example 6-1 | 14 | 39 | 2.8 | 77 | 385 |
| Example 6-2 | 10 | 26 | 2.6 | 69 | 384 |
| Example 6-3 | 21 | 38 | 1.8 | 46 | 386 |
| PDT* | - | - | | 118 | 413 |
| PTA-TCDM** | 10.3 | - | 1.9 | 115 | - |

| | | | | | |
|---|---|---|---|---|---|
| ** Poly(tricyclodecanedimethylene-terephthalate), data from* J Polym Res (2016) 23: 42*, table 1* ** *Poly(tricyclodecanedimethylene-terephthalate), data from* ACS Sustainable Chem. Eng. 2020, 8, 15199-15208*, table 1* | | | | | |

Evaluation of the cycloaliphatic diol compounds obtained in examples 1, 2, 3, 5, and 6 as monomers for the polyester synthesis reveals promising results for the application as building blocks in polyesters providing amorphous properties and high glass transition temperatures. All synthesized polyesters were dissolved in THF and precipitated in cold MeOH. They are collected in several fractions (marked with "-X", with X = 1 to 2, to 1 to 4 in table 3) and analyzed by gel-permeation chromatography (GPC), thermogravimetric analysis (TGA), and differential scanning calorimetry (DSC) analysis (table 3).

The polyesters made of diols of examples 1 and 2 showed the highest polydispersity values. In comparison with the known polyesters based on Dicidol (tricyclodecandimethanol) as diol monomer (table 3), the polyesters made of diols of example 5 (T_{g} = 84 °C, table 3, example 5-1) and example 6 (T_{g} = 69 °C, table 3, example 6-2) showed lowest achievable glass transition temperatures compared to PDT and PTA-TCDM (T_{g} = 118 °C and 115 °C respectively, table 3). Additional evaluation of the diol of example 3 as monomer in polyester synthesis results in the highest achievable glass transition temperature (T_{g} = 103, table 3, example 3-4) compared to PDT (T_{g} = 118 °C, table 3). The number average molecular weight as well as the polydispersity index of the polymers according to the invention are in a similar range as the values for the known polyester PTA-TCDM.

## Claims

1. Polymer comprising units derived from a carboxylic acid comprising at least two carboxylic groups or its anhydride and units from an alcohol comprising at least two OH-groups, **characterized in that** the alcohol comprising at least two OH-groups is a bi-cyclo-aliphatic diol of formula (IX) 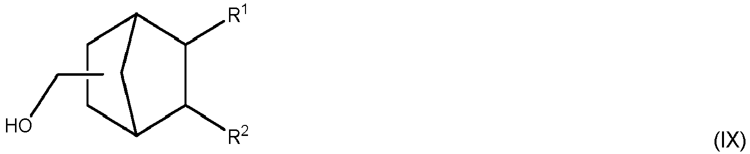 with R¹ = ethyl, -CH₂-CH₂-CH₂OH, or -CH(-CH₃)-CH₂OH, and R² = H or -CH₂OH, with the proviso that R² is not H when R¹ = ethyl.

2. Polymer according to claim 1, **characterized in that** at least 50 mol-% of the units, more preferably of from 60 to 100 mol-%, and most preferably of from 70 to 95 mol-% of units in the polymer derived from an alcohol comprising at least two OH-groups are based on a bicyclo-aliphatic diol of formula (IX).

3. Polymer according to claim 1 or 2, **characterized in that** the bicyclo-aliphatic diol is 2-(5-Hydroxymethylbicyclo[2.2.1]hept-2-yl)propan-1-ol, 2-(6-Hydroxymethylbicyclo[2.2.1]hept-2-yl)propan-1-ol, 3-(5-Hydroxymethylbicyclo[2.2.1]hept-2-yl)-propan-1-ol, 3-(6-Hydroxymethylbicyclo[2.2.1]hept-2-yl)propan-1-ol, (3-ethylbicyclo[2.2.1]heptane-2,5-diyl)dimethanol, or (3-ethylbicyclo[2.2.1]heptane-2,6-diyl)dimethanol, or a mixture thereof, preferably a mixture of 2-(5-Hydroxymethylbicyclo[2.2.1]hept-2-yl)propan-1-ol, 2-(6-Hydroxymethylbicyclo[2.2.1]hept-2-yl)propan-1-ol, 3-(5-Hydroxymethylbicyclo[2.2.1]hept-2-yl)-propan-1-ol, 3-(6-Hydroxymethylbicyclo[2.2.1]hept-2-yl)propan-1-ol, (3-ethylbicyclo[2.2.1]heptane-2,5-diyl)dimethanol, and (3-ethylbicyclo[2.2.1]heptane-2,6-diyl)dimethanol.

4. Polymer according to any of claims 1 to 3, **characterized in that** the polymer has a number averaged molecular weight Mn, determined by the method given in the description, of from 8 to 25 kg/mol.

5. Polymer according to any of claims 1 to 4, **characterized in that** the polymer has a weight averaged molecular weight Mw, determined by the method given in the description, of from 10 to 75 kg/mol.

6. Polymer according any of claims 1 to 5, **characterized in that** the polymer has a glass transition temperature Tg, determined by the method given in the description, of from 40 to 110 °C.

7. Polymer according any of claims 1 to 6, **characterized in that** the units derived from a carboxylic acid comprising at least two carboxylic groups are derived from phthalic acid, isophthalic acid, terephthalic acid, 1,2-cyclohexan dicarboxylic acid, 1,3-cyclohexan dicarboxylic acid, 1,4-cyclohexan dicarboxylic acid, maleic acid, malonic acid, succinic acid, 1,2,4-benzenetricarboxylic acid, glutaric acid, adipic acid, 2,2,4-trimethyl-adipic acid, azelaic acid, undecanedioic acid, octadecanedioic acid, dimer fatty acids, itaconic acid, fumaric acid, naphthalene-2,6-dicarboxylic acid, or sebacic acid or an anhydride or ester, more preferably from phthalic acid, isophthalic acid, terephthalic acid, maleic acid, adipic acid, or sebacic acid, and most preferably from terephthalic acid.

8. Polymer according to claim 7, **characterized in that** at least 50 mol-%, more preferably of from 60 to 100 mol-%, and most preferably of from 70 to 95 mol-% of units in the polymer that are derived from carboxylic acid comprising at least two carboxylic groups are based on phthalic acid, isophthalic acid, terephthalic acid, 1,2-cyclohexan dicarboxylic acid, 1,3-cyclohexan dicarboxylic acid, 1,4-cyclohexan dicarboxylic acid, maleic acid, malonic acid, succinic acid, 1,2,4-benzenetricarboxylic acid, glutaric acid, adipic acid, 2,2,4-trimethyl-adipic acid, azelaic acid, undecanedioic acid, octadecanedioic acid, dimer fatty acids, itaconic acid, fumaric acid, naphthalene-2,6-dicarboxylic acid, or sebacic acid or a mixture thereof.

9. Process for preparing a polymer by reacting at least one carboxylic acid comprising at least two carboxylic groups or its anhydride or ester and at least one alcohol comprising at least two OH-groups, **characterized in that** the alcohol comprising at least two OH-groups used is a bicyclo-aliphatic diol of formula (IX) 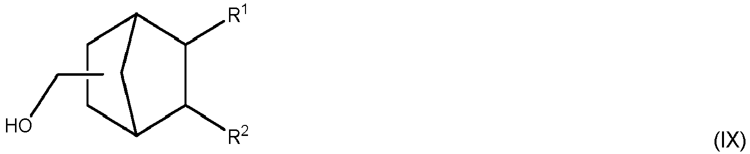 with R¹ = ethyl, -CHz-CHz-CHzOH, or -CH(-CH₃)-CH₂OH, and R² = H or -CHzOH, with the proviso that R² is not H when R¹ = ethyl.

10. Process according to claim 9, **characterized in that** a polymer according to any of claims 1 to 8 is prepared.

11. Process according to claim 9 or 10, **characterized in that** as bicyclo-aliphatic diol is used 2-(5-hydroxymethylbicyclo[2.2.1]hept-2-yl)propan-1-ol, 2-(6-hydroxymethylbicyclo[2.2.1]hept-2-yl)propan-1-ol, 3-(5-hydroxymethylbicyclo[2.2.1]hept-2-yl)-propan-1-ol, 3-(6-hydroxymethylbicyclo[2.2.1]hept-2-yl)propan-1-ol, (3-ethylbicyclo[2.2.1]heptane-2,5-diyl)dimethanol, or (3-ethylbicyclo[2.2.1]heptane-2,6-diyl)dimethanol, or a mixture of two or more of these compounds, preferably a mixture of 2-(5-hydroxymethylbicyclo[2.2.1]hept-2-yl)propan-1-ol, 2-(6-hydroxymethylbicyclo[2.2.1]hept-2-yl)propan-1-ol, 3-(5-hydroxymethylbicyclo[2.2.1]hept-2-yl)-propan-1-ol, 3-(6-hydroxymethylbicyclo[2.2.1]hept-2-yl)propan-1-ol, (3-ethylbicyclo[2.2.1]heptane-2,5-diyl)dimethanol, and (3-ethylbicyclo[2.2.1]heptane-2,6-diyl)dimethanol.

12. Process according to any of claims 9 to 11, **characterized in that** phthalic acid, isophthalic acid, terephthalic acid, 1,2-cyclohexan dicarboxylic acid, 1,3-cyclohexan dicarboxylic acid, 1,4-cyclohexan dicarboxylic acid, maleic acid, malonic acid, succinic acid, 1,2,4-benzenetricarboxylic acid, glutaric acid, adipic acid, 2,2,4-trimethyl-adipic acid, azelaic acid, undecanedioic acid, octadecanedioic acid, dimer fatty acids, itaconic acid, fumaric acid, naphthalene-2,6-dicarboxylic acid, or sebacic acid or its anhydride or ester, more preferably phthalic acid, isophthalic acid, terephthalic acid, maleic acid, adipic acid, or sebacic acid or its anhydride or ester, and most preferably dimethyl terephthalate, is used as carboxylic acid comprising at least two carboxylic groups or its anhydride or ester.

13. Process according to any of claims 9 to 12, **characterized in that** 2-(5-hydroxymethylbicyclo[2.2.1]hept-2-yl)propan-1-ol, 2-(6-hydroxymethylbicyclo[2.2.1]hept-2-yl)propan-1-ol, 3-(5-hydroxymethylbicyclo[2.2.1]hept-2-yl)-propan-1-ol, 3-(6-hydroxymethylbicyclo[2.2.1]hept-2-yl)propan-1-ol, (3-ethylbicyclo[2.2.1]heptane-2,5-diyl)dimethanol, or (3-ethylbicyclo[2.2.1]heptane-2,6-diyl)dimethanol or a mixture of two or more of these compounds is used, obtained by a method comprising a step of hydroformylation and a step of reduction, using a compound according to formula (II) 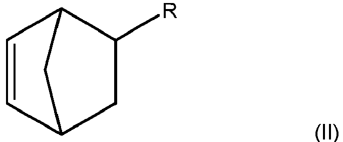 with R = vinyl, ethylidene, or acetyl, more preferably with R = vinyl or ethylidene, and most preferably with R = vinyl, as starting material.

14. Process according to claim 13, **characterized in that** the hydroformylation step is performed in the presence of a catalyst comprising Rhodium and a phosphor comprising ligand.

15. Use of a polymer according to any of claims 1 to 8 or obtained by a process according to any of claims 9 to 14 as or for the production of lacquers, coatings or adhesives, preferably tube, coil, or can coatings, metal decorating enamels, heat sealing lacquers, hot laminating adhesives, or primers.
